(19) Europäisches Patentamt / European Patent Office / Office européen des brevets

(11) **EP 2 639 282 A1**

(12) **EUROPEAN PATENT APPLICATION**

(43) Date of publication:
18.09.2013 Bulletin 2013/38

(51) Int Cl.:
*C09J 153/02* (2006.01)   *C09J 193/04* (2006.01)
*C09J 11/08* (2006.01)   *C08J 5/18* (2006.01)
*C09J 7/02* (2006.01)

(21) Application number: 13159512.6

(22) Date of filing: 15.03.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 16.03.2012   JP 2012060664
16.03.2012   JP 2012060665
09.08.2012   JP 2012177534
09.08.2012   JP 2012177535
12.09.2012   JP 2012200907

(71) Applicant: **NITTO DENKO CORPORATION**
**Ibaraki-shi, Osaka 567-8680 (JP)**

(72) Inventors:
• **Nakayama, Naoki**
**Ibaraki-shi, Osaka 567-8680 (JP)**
• **Nishiyama, Naoyuki**
**Ibaraki-shi, Osaka 567-8680 (JP)**
• **Okada, Yoshihiro**
**Ibaraki-shi, Osaka 567-8680 (JP)**
• **Wada, Shouhei**
**Ibaraki-shi, Osaka 567-8680 (JP)**

(74) Representative: **Grünecker, Kinkeldey,**
**Stockmair & Schwanhäusser**
**Leopoldstrasse 4**
**80802 München (DE)**

(54) **Pressure-sensitive adhesive composition and pressure-sensitive adhesive sheet**

(57)   The present invention provides a pressure-sensitive adhesive composition comprising a base polymer and a tackifier resin. The base polymer is a block copolymer of a mono-vinyl-substituted aromatic compound and a conjugated diene compound. The tackifier resin comprises a low softening point resin having a softening point below 120 °C and a high softening point resin having a softening point of 120 °C or above. The high softening point resin comprises a terpene-phenol resin.

Fig. 1

EP 2 639 282 A1

**Description**

BACKGROUND OF THE INVENTION

1. Field of the Invention

The present invention relates to a pressure-sensitive adhesive composition comprising, as a base polymer, a block copolymer (e.g., a styrene-based block copolymer) of a mono-vinyl-substituted aromatic compound and a conjugated diene compound. The present invention also relates to a pressure-sensitive adhesive sheet that comprises a pressure-sensitive adhesive comprising such a copolymer as a base polymer.

The present application claims priority based on Japanese Patent Application Nos. 2012-060664 and 2012-060665 filed on March 16th, 2012, Japanese Patent Application Nos. 2012-177534 and 2012-177535 filed on August 9th, 2012, and Japanese Patent Application No. 2012-200907 filed on September 12th, 2012, and the entire contents of these applications are incorporated herein by reference.

2. Description of the Related Art

In general, pressure-sensitive adhesive (PSA) exists as a soft solid (a viscoelastic material) in a room temperature range and has a property to adhere easily to an adherend with some pressure applied. Taking advantage of such a property, PSA has been widely used as a means of attachment that works efficiently and produces dependable adhesion in various industrial fields from home appliances to automobiles, OA equipment, and so on. A typical composition of PSA comprises a base polymer and a tackifier resin. As the base polymer, a polymer that exhibits rubber elasticity at room temperature can be preferably used. For example, Japanese Patent Application Publication Nos. 2001-123140, 2001-342441 and H10-287858 disclose a PSA comprising a styrene-based block copolymer such as a styrene-isoprene-styrene block copolymer (SIS), a styrene-butadiene-styrene block copolymer (SBR), or the like.

SUMMARY OF THE INVENTION

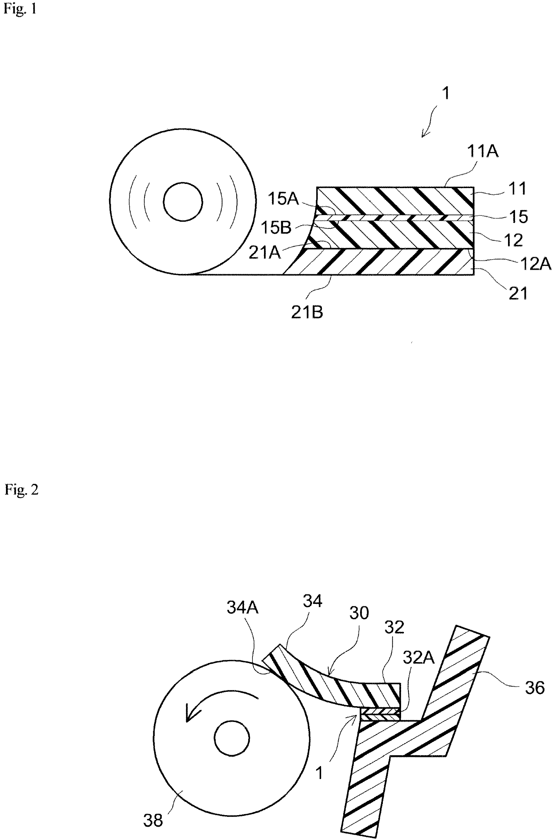

Because of the PSA's property to easily adhere to an adherend with some pressure applied, a joint by PSA tends to show low resistance against continuous stress applied to the joint (i.e., a low ability to resist the stress and maintain good adhesion). For instance, in an application shown in Fig. 2, area 32A on first end 32 of thick plastic blade (resin blade) 30 is fastened (attached) via double-faced PSA sheet 1 to a surface of plastic molding 36, and rotating roller 38 is placed closely to molding 36; and matters stuck on the roller surface are scraped off when roller 38 rotates while area 34A on second end 34 of blade 30 is pushed against the surface of roller 38 by the elastic force of blade 30. In such an application, because of the rotational friction by roller 38 and the elastic force by blade 30, the joint by double-faced PSA sheet I is subjected to continuous stress. Thus, it is useful to provide a PSA sheet capable of forming a joint that is unlikely to peel off in such an application.

One objective of the present invention is to provide a PSA composition capable of producing a PSA sheet that exhibits high resistance against continuous stress. Another related objective is to provide a PSA sheet that exhibits high resistance against continuous stress.

The PSA composition disclosed herein comprises a base polymer and a tackifier resin. The base polymer is a block copolymer of a mono-vinyl-substituted aromatic compound and a conjugated diene compound. The tackifier resin comprises a low softening point resin having a softening point below 120 °C and a high softening point resin having a softening point of 120 °C or above. The high softening point resin comprises a terpene-phenol resin. In other words, the present specification provides a PSA composition comprising, as the tackifier resin, a low softening point resin having a softening point below 120 °C and a high softening point resin having a softening point of 120 °C or above. According to such a PSA composition, can be obtained a PSA sheet that exhibits excellent resistance against continuously applied stress (e.g., a good ability to resist against flexural strain of a thick plastic film and maintain good adhesion).

The present specification also provides a PSA sheet comprising a PSA layer. The PSA layer comprises a base polymer and a tackifier resin. The base polymer is a block copolymer of a mono-vinyl-substituted aromatic compound and a conjugated diene compound. The tackifier resin comprises a low softening point resin having a softening point below 120°C and a high softening point resin having a softening point of 120 °C or above. The high softening point resin comprises a terpene-phenol resin. In other words, the present specification provides a PSA sheet comprising a PSA layer that comprises, as the tackifier resin, a low softening point resin having a softening point below 120°C and a high softening point resin having a softening point of 120 °C or above. A PSA sheet comprising such a PSA layer may exhibit excellent resistance against continuously applied stress (e.g., a good ability to resist against flexural strain of a thick plastic film and maintain good adhesion).

## BRIEF DESCRIPTION OF THE DRAWINGS

Fig. 1 shows a cross-sectional view schematically illustrating the constitution of a PSA sheet according to an embodiment (a substrate-containing double-faced PSA sheet).

Fig. 2 shows a cross-sectional view schematically illustrating an application example of the PSA sheet.

Fig. 3 shows a diagram illustrating a method for testing the repulsion resistance.

Fig. 4 shows a diagram illustrating a method for testing the peel property under a constant load.

Fig. 5 shows a chart illustrating the results of the repulsion resistance test for double-faced PSA sheets a1 to a6 according to Experimental Example 1.

Fig. 6 shows a chart illustrating the results of the repulsion resistance test for double-faced PSA sheets c1 to c5 according to Experimental Example 3.

Fig. 7 shows a chart illustrating the results of the repulsion resistance test for double-faced PSA sheets e1 to e7 according to Experimental Example 5.

Fig. 8 shows a cross-sectional view schematically illustrating the constitution of a PSA sheet according to another embodiment (a substrate-free double-faced PSA sheet).

Fig. 9 shows a cross-sectional view schematically illustrating the constitution of a PSA sheet according to another embodiment (a substrate-containing single-faced PSA sheet).

## DETAILED DESCRIPTION OF THE INVENTION

Preferred embodiments of the present invention are described below. Matters necessary to practice this invention other than those specifically referred to in this description may be understood as design matters based on the conventional art in the pertinent field for a person of ordinary skill in the art. The present invention can be practiced based on the contents disclosed in this description and common technical knowledge in the subject field.

In the drawings referenced below, a common reference numeral is assigned to members or sites producing the same effects, and duplicated descriptions are sometimes omitted or simplified. The embodiments described in the drawings are schematized for clear illustration of the present invention, and do not represent the accurate sizes or reduction scales of the PSA sheet to be provided as an actual product by the present invention.

As used herein, the term "PSA" refers to, as described earlier, a material that exists as a soft solid (a viscoelastic material) in a room temperature range and has a property to adhere easily to an adherend with some pressure applied. As defined in "Adhesion: Fundamental and Practice" by C. A. Dahlquist (McLaren & Sons (1966), P. 143), PSA referred to herein is a material that has a property satisfying complex tensile modulus $E^*$ (1Hz) < $10^7$ dyne/cm$^2$ (typically, a material that exhibits the said characteristics at 25 °C). The "base polymer" of a PSA refers to the primary component among rubbery polymers (polymers that exhibit rubber elasticity in a room temperature range) contained in the PSA, that is, a component accounting for 50 % by mass or more of all rubbery polymers.

As used herein, "block copolymer of a mono-vinyl-substituted aromatic compound and a conjugated diene compound" refers to a polymer comprising at least one each of a segment (segment A) that comprises a mono-vinyl-substituted aromatic compound as a primary monomer and a segment (segment B) that comprises a conjugated diene compound as a primary monomer, with the primary monomer being a copolymer component accounting for more than 50 % by mass (the same applies hereinafter). In general, the glass transition temperature of segment A is higher than that of segment B. Examples of a typical constitution of such a polymer include an ABA triblock copolymer having a triblock structure where segment B (soft segment) is coupled to segment A (hard segment) at each terminal, an AB diblock copolymer having a diblock structure comprising one segment A and one segment B, and the like.

As used herein, "styrene-based block copolymer" refers to a polymer comprising at least one styrene block. The "styrene block" refers to a segment comprising styrene as a primary monomer. A typical example of a styrene block referred to herein is a segment consisting essentially of styrene. "Styrene-isoprene block copolymer" refers to a polymer comprising at least one styrene block and at least one isoprene block (a segment comprising isoprene as a primary monomer). Typical examples of a styrene-isoprene block copolymer include a triblock copolymer having a triblock structure where an isoprene block (soft segment) is coupled to a styrene block (hard segment) at each terminal, a diblock copolymer having a diblock structure comprising one isoprene block and one styrene block, and the like. "Styrene-butadiene block copolymer" refers to a polymer comprising at least one styrene block and at least one butadiene block (a segment comprising butadiene as a primary monomer).

As used herein, "the styrene content" in a styrene-based block copolymer refers to the mass fraction of styrene contained in the total mass of the block copolymer. The styrene content can be measured by NMR (nuclear magnetic resonance spectroscopy).

The proportion of the "diblock copolymer (which hereinafter may be referred to as the "diblock fraction" or "diblock ratio") contained in a styrene-based block copolymer can be determined by the following method. That is, a given styrene-based block copolymer is dissolved in tetrahydrofuran (THF) and subjected to high-performance liquid chromatography at a temperature of 40 °C with THF as the mobile phase passing at a flow rate of 1 mL/min through four linearly connected columns consisting of two each of liquid chromatography columns GS5000H and G4000H both available from Tosoh Corporation; from the resulting chromatogram, the area of the peak corresponding to the diblock copolymer is determined; and the diblock fraction is determined as the percentage of the peak's area relative to the total area of all peaks.

<Examples of constitution of PSA sheet>

The PSA sheet (which can be a long sheet such as tape) disclosed herein may have, for example, a form of an adhesively double-faced PSA sheet having the cross-sectional structure shown in Fig. 1. Double-faced PSA sheet 1 comprises plastic film 15 as a substrate as well as first and second PSA layers 11 and 12 supported by the two faces of substrate 15, respectively. More specifically, first PSA layer 11 and second PSA layer 12 are provided on first face 15A and second face 15B of substrate 15, respectively, with both faces 15A and 15B being non-releasing. Prior to use (before adhered to an adherend), as shown in Fig. 1, double-faced PSA sheet 1 can be in a roll wherein PSA sheet 1 is wound along with release liner 21 having front face (release face) 21 A and back face (release face) 21 B. In double-faced PSA sheet 1 in such an embodiment, the surface (second adhesive face 12A) of second PSA layer 12 and the surface (first adhesive face 11A) of first PSA layer 11 are protected with front face 21A and back face 21B of release liner 21, respectively. Alternatively, it may be in an embodiment where first adhesive face 11A and second adhesive face 12A are protected with two separate release liners, respectively.

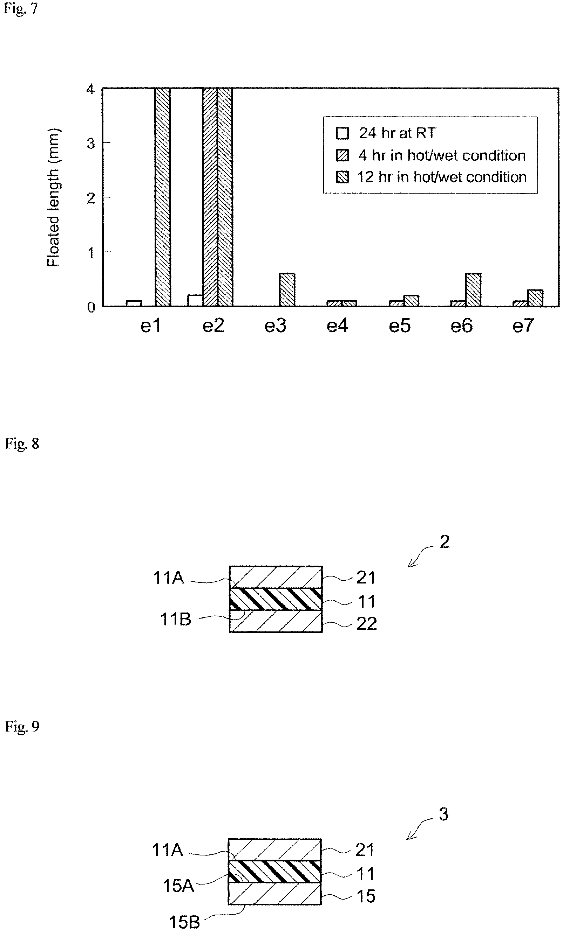

The art disclosed herein can be applied preferably to a substrate-containing double-faced PSA sheet as shown in Fig. 1, and can also be applied to double-faced PSA sheet 2 that is free of a substrate (i.e., having no substrate) as shown in Fig. 8. Prior to use, double-faced PSA sheet 2 can be, for instance, in an embodiment as shown in Fig. 8 where first adhesive face 11A and second adhesive face 11B of substrate-free PSA layer 11are protected with release liners 21 and 22, respectively, with each release liner comprising a release face at least on the PSA-layer-side surface (front face). Alternatively, it may be in an embodiment without release liner 22, wherein both the two faces of release liner 21 are release faces, and PSA layer 11 is overlaid therewith and wound in a roll so that the back face of release liner 21 contacts and protects second adhesive face 11B.

The art disclosed herein can be applied to adhesively single-faced, substrate-containing PSA sheet 3 as shown in Fig. 9 as well, with the PSA sheet comprising substrate 15 and PSA layer 11 I supported by first face (non-release face) 15A of the substrate. Prior to use, PSA sheet 3 can be, for instance, in an embodiment as shown in Fig. 9 where surface (adhesive face) 11A of PSA layer 11 is protected with release liner 21 comprising a release face at least on the PSA-layer-side surface (front face). Alternatively, it may be in an embodiment without release liner 21, wherein substrate 15 comprises a release face on second face 15B, and substrate-containing PSA sheet 3 is wound in a roll so that second face 15B of substrate 15 contacts and protects first adhesive face 11A.

The art disclosed herein is described mostly with reference to examples of embodiments applicable to a substrate-containing double-faced PSA sheet or a PSA layer therein, but these are not to limit the application of the said art.

<Base polymer>

In the art disclosed herein, PSA comprises as a base polymer a block copolymer of a mono- vinyl- substituted aromatic compound and a conjugated diene compound, where the PSA may be construed as the solids content of a PSA composition or as constituents of a PSA layer. The mono- vinyl- substituted aromatic compound refers to a compound in which a functional group containing a vinyl group is bonded to an aromatic ring. Typical examples of the aromatic ring include a benzene ring (which can be a benzene ring substituted with a functional group (e.g., an alkyl group) containing no vinyl groups) . Examples of the mono- vinyl- substituted aromatic compound include styrene, $\alpha$- methyl styrene, vinyl toluene, vinyl xylene, and the like. Examples of the conjugated diene compound include 1, 3- butadiene, isoprene, and the like. Among such block copolymers, one species can be used solely, or two or more species can be used together as the base polymer.

Segment A (hard segment) in the block copolymer comprises the mono-vinyl-substituted aromatic compound (for which, two or more species can be used together) at a copolymerization ratio of preferably 70 % by mass or greater (more preferably 90 % by mass or greater, or it can be essentially 100 % by mass). Segment B (soft segment) in the block copolymer comprises the conjugated diene compound (for which, two or more species can be used) at a copolymerization ratio of preferably 70 % by mass or greater (more preferably 90 % by mass or greater, or it can be essentially 100 % by mass). According to such a block copolymer, a PSA sheet of higher performance can be obtained.

The block copolymer may be a diblock copolymer, a triblock copolymer, a radial copolymer, a mixture of these, or the like. In a triblock copolymer or a radial copolymer, it is preferable that segment A (e.g., a styrene block) is placed at a terminal of the polymer chain. Segment A placed terminally on the polymer chain is likely to aggregate to form a domain, whereby pseudo crosslinks are formed, resulting in increased cohesive strength of the PSA. In the art disclosed herein, from the standpoint of the adhesive strength (peel strength) to an adherend and the repulsion resistance (especially, the repulsion resistance under a hot/wet condition), a preferable block copolymer has a diblock fraction of 30 % by mass or greater (more preferably 40 % by mass or greater, even more preferably 50 % by mass or greater, or especially preferably 60 % by mass or greater, typically 65 % by mass or greater, e.g., 70 % by mass or greater). From the standpoint of the resistance against peeling under a constant load (the peel property under a constant load), can be used a block copolymer having a diblock fraction of preferably 90 % by mass or smaller (more preferably 85 % by mass or smaller, e.g., 80 % by mass or smaller). In an embodiment of the art disclosed herein, can be used a block copolymer having a diblock fraction of preferably 30 to 80 % by mass (more preferably 40 to 80 % by mass, even more preferably 50 to 80 % by mass, e.g., 50 to 70 % by mass). In another embodiment (e.g., an embodiment as described later wherein terpene-phenol resins A and B having different hydroxyl values are contained as the tackifier resin), can be used a block copolymer having a diblock fraction of preferably 30 to 90 % by mass (typically 40 to 90 % by mass, or more preferably 50 to 90 % by mass, e.g., 60 to 85 % by mass).

< Styrene-based block copolymer>

In an embodiment of the art disclosed herein, the base polymer is a styrene-based block copolymer. For instance, it can be practiced preferably in an embodiment wherein the base polymer comprises at least one of a styrene-isoprene block copolymer and a styrene-butadiene block copolymer. It is preferable that the styrene-based block copolymer contained in the PSA comprises either a styrene-isoprene block copolymer at a ratio of 70 % by mass or greater, a styrene-butadiene block copolymer at a ratio of 70 % by mass or greater, or a styrene-isoprene block copolymer and a styrene-butadiene block copolymer at a combined ratio of 70 % by mass or greater. In a preferable embodiment, essentially all (e.g., 95 to 100 % by mass) of the styrene-based block copolymer is a styrene-isoprene block copolymer. In another preferable embodiment, essentially all (e.g., 95 to 100 % by mass) of the styrene-based block copolymer is a styrene-butadiene block copolymer. According to these compositions, can be preferably obtained a PSA sheet that exhibits excellent resistance against continuously applied stress also in a good balance with other adhesive properties.
The styrene-based block copolymer can be a diblock copolymer, a triblock copolymer, a radial copolymer, a mixture of these, or the like. In a triblock copolymer and a radial copolymer, it is preferable that a styrene block is placed at a terminal of the polymer chain. The styrene block placed terminally on the polymer chain is likely to aggregate to form a domain, whereby pseudo crosslinks are formed, resulting in increased cohesive strength of the PSA. In the art disclosed herein, from the standpoint of the adhesive strength (peel strength) to an adherend and the repulsion resistance (especially, the repulsion resistance under a hot/wet condition), a preferable styrene-based block copolymer has a diblock fraction of 30 % by mass or greater (more preferably 40 % by mass or greater, even more preferably 50 % by mass or greater, or especially preferably 60 % by mass or greater, typically 65 % by mass or greater, e.g., 70 % by mass or greater). From the standpoint of the resistance against peeling under a constant load (the peel property under a constant load), can be used a styrene-based block copolymer having a diblock fraction of preferably 90 % by mass or smaller (more preferably 85 % by mass or smaller, e.g., 80 % by mass or smaller). In an embodiment of the art disclosed herein, can be used a styrene-based block copolymer having a diblock fraction of preferably 30 to 80 % by mass (more preferably 40 to 80 % by mass, even more preferably 50 to 80 % by mass, e.g., 50 to 70 % by mass). In another embodiment (e.g., an embodiment as described later wherein terpene-phenol resins A and B having different hydroxyl values are contained as the tackifier resin), can be used a styrene-based block copolymer having a diblock fraction of preferably 30 to 90 % by mass (typically 40 to 90 % by mass, or more preferably 50 to 90 % by mass, e.g., 60 to 85 % by mass).
The styrene content in the styrene-based block copolymer can be, for instance, 5 to 40 % by mass. From the standpoint of the repulsion resistance and the peel property under a constant load, in usual, it is preferable that the styrene content is 10 % by mass or greater (more preferably greater than 10 % by mass, e.g., 12 % by mass or greater). From the standpoint of the PSA's cohesive strength (holding power) and adhesive strength to an adherend, the styrene-based block copolymer has a styrene content of preferably 35 % by mass or less (typically 30 % by mass or less, or more preferably 25 % by mass or less, e.g., less than 20 % by mass). In an embodiment of the art disclosed herein, can be used a styrene-based block copolymer having a styrene content of preferably 10 to 35 % by mass (more preferably greater than 15% by mass, but less than 24 % by mass, e.g., 16 to 23 % by mass). In another embodiment (e.g., an embodiment as described later wherein terpene-phenol resins A and B having different hydroxyl values are contained as the tackifier resin), can be preferably used a styrene-based block copolymer having a styrene content of 12 % by mass or greater, but less than 20 % by mass.

<Tackifier resin>

The PSA in the art disclosed herein comprises a tackifier resin in addition to the base polymer (e.g., a styrene-based block copolymer) . As the tackifier resin, can be used one, two or more species selected from various tackifier resins such as known petroleum resins, terpene resins, rosin- based resins, rosin- derivative resins, ketone- based resins, and the like.

Examples of the petroleum resin include aliphatic (C5- based) petroleum resins, aromatic (C9- based) petroleum resins, C5/C9 copolymer- based petroleum resins, alicyclic petroleum resins, hydrogenated products of these, and the like.

Examples of the terpene resins include terpene resins such as poly- α- pinene, poly- β- pinene, poly- dipentene, etc. (which hereinafter may be referred to as "unmodified terpene resins" to be clearly distinguished from modified terpene resins listed later) ; modified terpene resins obtainable from these via a modification (phenol modification, styrene modification, hydrogenation, hydrocarbon modification, or the like) ; and so on. Examples of the modified terpene resin include terpene- phenol resins, styrene- modified terpene resins, hydrogenated terpene resins, and the like.

The "terpene- phenol resin" refers to a polymer containing terpene residue and phenol residue, and the scope thereof encompasses both a terpene- phenol copolymer resin and a phenol- modified terpene resin, with the former being a copolymer of a terpene and a phenolic compound, and the latter being a phenol- modification product of a terpene homopolymer or a terpene copolymer (a terpene resin, typically an unmodified terpene resin) . Preferable examples of a terpene in the terpene- phenol resin include mono- terpenes such as α- pinene, β- pinene, limonene (including *d*- limonene, *l*- limonene, and *d/ l*- limonene (dipentene) ) , and the like.

Examples ofthe rosin-based resin include unmodified rosins (raw rosins) such as gum rosin, wood rosin, tall-oil rosin, etc.; modified rosins obtainable from these unmodified rosins via a modification such as hydrogenation, disproportionation, polymerization, etc. (hydrogenated rosins, disproportionated rosins, polymerized rosins, other chemically-modified rosins, etc.); and the like.

Examples of the rosin-derived resins include rosin esters such as unmodified rosins esterified with alcohols (i.e., esterification products of unmodified rosins) and modified rosins (hydrogenated rosins, disproportionated rosins, polymerized rosins, etc.) esterified with alcohols (i.e., esterification products of modified rosins), and the like; unsaturated fatty-acid-modified rosins obtainable from unmodified rosins and modified rosins (hydrogenated rosin, disproportionated rosin, polymerized rosin, etc.) via modifications with unsaturated fatty acids; unsaturated fatty-acid-modified rosin esters obtainable from rosin esters via modifications with unsaturated fatty acids; rosin alcohols obtainable via reduction of carboxyl groups from unmodified rosins, modified rosins (hydrogenated rosins, disproportionated rosins, polymerized rosin, etc.), unsaturated fatty-acid-modified rosins or unsaturated fatty-acid-modified rosin esters; metal salts of rosins including unmodified rosins, modified rosins, various rosin derivatives, etc. (in particular, metal salts of rosin esters); rosin phenol resins obtainable from rosins (unmodified rosins, modified rosins, various rosin derivatives, etc.) via addition of phenol in the presence of an acid catalyst followed by thermal polymerization; and so on.

The PSA disclosed herein comprises, as the tackifier resin, a low softening point resin having a softening point below 120 °C and a high softening point resin having a softening point of 120 °C or above. Herein, the softening point of a tackifier resin is defined as a value measured based on the softening point test method (ring and ball method) specified in JIS K 5902 and JIS K 2207. In particular, a sample is quickly melted at a lowest possible temperature, and with caution to avoid bubble formation, the melted sample is poured into a ring to the top, with the ring being placed on top of a flat metal plate. After cooled, any portion of the sample risen above the plane including the upper rim of the ring is sliced off with a small knife that has been somewhat heated. Following this, a support (ring support) is placed in a glass container (heating bath) having a diameter of 85 mm or larger and a height of 127 mm or larger, and glycerin is poured into this to a depth of 90 mm or deeper. Then, a steel ball (9.5 mm diameter, weighing 3.5 g) and the ring filled with the sample are immersed in the glycerin while preventing them from touching each other, and the temperature of glycerin is maintained at 20 °C ± 5 °C for 15 minutes. The steel ball is then placed at the center of the surface of the sample in the ring, and this is placed on a prescribed location of the support. While keeping the distance between the ring top and the glycerin surface at 50 mm, a thermometer is placed so that the center of the mercury ball of the thermometer is as high as the center of the ring, and the container is heated evenly by projecting a Bunsen burner flame at the midpoint between the center and the rim of the bottom of the container. After the temperature has reached 40 °C from the start of heating, the rate of the bath temperature rise must be kept at 5 °C ± 0.5 °C per minute. As the sample gradually softens, the temperature at which the sample flows out of the ring and finally touches the bottom plate is read as the softening point. Two or more measurements of softening point are performed at the same time, and their average value is used.

<High softening point resin>

The PSA disclosed herein is characterized by comprising a terpene-phenol resin as the high softening point resin. In usual, can be preferably used a terpene-phenol resin having a softening point of 120 °C or above, but 200 °C or below (typically 120 °C or above, but 180 °C or below, e.g., 125 °C or above, but 170°C or below). When the softening point is too low, the repulsion resistance and the resistance against peeling under a constant load may tend to turn out lower. When the softening point is too high, the adhesive strength (especially the adhesive strength at a low temperature) to an adherend may tend to turn out lower.

The terpene-phenol resin has a hydroxyl value (OH value) of preferably of 80 mgKOH/g or higher (e.g., 80 mgKOH/g to 250 mgKOH/g, typically 80 mgKOH/g to 200 mgKOH/g), more preferably 90 mgKOH/g or higher (typically 90 mgKOH/g to 180 mgKOH/g), or even more preferably 100 mgKOH/g or higher (typically 100 mgKOH/g to 180 mgKOH/g, e.g., 110 mgKOH/g to 180 mgKOH/g). A PSA using a terpene-phenol resin having such a hydroxyl value may exhibit, for instance, significantly higher resistance (especially under a hot/wet condition) against continuous stress as compared to a PSA using solely a terpene-phenol resin having a lower hydroxyl value (e.g., about 60 mgKOH/g). Thus, according to a terpene-phenol resin having such a hydroxyl value, can be obtained a PSA sheet having a good balance of adhesive strength, repulsion resistance, and peel property under a constant load. A terpene-phenol resin having a hydroxyl value of 120 mgKOH/g to 170 mgKOH/g can be preferably used as well.

As the hydroxyl value, can be used a value measured by the potentiometric titration method specified in JIS K 0070:1992. Details ofthe method are described below.

[Method for measuring hydroxyl value]

1. Reagents

(1) As the acetylation reagent, is used a solution prepared by mixing with sufficient stirring about 12.5 g (approximately 11.8 mL) of anhydrous acetic acid and pyridine added up to a total volume of 50 mL. Alternatively, is used a solution prepared by mixing with sufficient stirring about 25 g (approximately 23.5 mL) of anhydrous acetic acid and pyridine up to a total volume of 100 mL.
(2) As the titrant, is used a 0.5 mol/L potassium hydroxide (KOH) solution in ethanol.
(3) For others, toluene, pyridine, ethanol and distilled water should be ready for use.

2. Procedures

(1) Approximately 2 g of analyte is accurately weighed out in a flat-bottom flask, 5 mL of the acetylation reagent and 10 mL of pyridine are added, and an air condenser is placed on.
(2) The flask is heated in a bath at 100°C for 70 minutes and then cooled. From the top of the condenser, 35 mL of toluene is added as a solvent and stirred. Subsequently, 1 mL of distilled water is added and the resultant is stirred to decompose any remaining anhydrous acetic acid. The flask is heated in the bath again for 10 minutes to complete the decomposition and then cooled.
(3) After rinsed with 5 mL of ethanol, the condenser is removed. Subsequently, 50 mL of pyridine is added as a solvent and the resultant is stirred.
(4) Using a volumetric pipette, is added 25 mL of the 0.5 mol/L KOH ethanol solution.
(5) Potentiometric titration is carried out with the 0.5 mol/L KOH ethanol solution. The inflection point in the resulting titration curve is taken as the final point.
(6) For a blank titration, procedures (1) to (5) are carried out without addition of the analyte.

3. Calculations

The hydroxyl value is calculated by the following equation:

$$\text{Hydroxyl value (mgKOH/g)} = [(B - C) \times f \times 28.05]/S + D$$

wherein:

B is the volume (mL) of the 0.5 mol/L KOH ethanol solution used in the blank titration;
C is the volume (mL) of the 0.5 mol/L KOH ethanol solution used to titrate the analyte;
f is the factor of the 0.5 mol/L KOH ethanol solution;
S is the mass of analyte (g);
D is the acid value;
28.05 is one half the molecular weight of KOH.

The PSA disclosed herein may further comprise another resin as the high softening point resin besides a terpene-phenol resin. Preferable examples of the other high softening point resin that can be used along with a terpene-phenol resin include polymerized rosins and esterification products of polymerized rosins, and the like. It is preferable that 25 % by mass or greater (more preferably 30 % by mass or greater) of all the high softening point resin is a terpene-phenol resin. The high softening point resin may comprise a terpene-phenol resin at a ratio of preferably 50 % by mass or greater (more preferably 70 % by mass or greater, or even more preferably 80 % by mass or greater, e.g., 90 % by mass or greater). Essentially all (e.g., 95 % by mass or greater) of the high softening point resin can be a terpene-phenol resin. For instance, terpene-phenol resin A and terpene-phenol resin B described later may account for essentially all of the high softening point resin.

The high softening point resin content can be, for instance, 20 to 100 parts by mass relative to 100 parts by mass of the base polymer, and it is preferable to be more than 35 parts by mass, but 80 parts by mass or less (e.g., 40 to 70 parts by mass). When the high softening point resin content is too low, the repulsion resistance or the peel property under a constant load may tend to turn out lower. When the high softening point resin content is too high, the adhesive strength may tend to turn out lower. The art disclosed herein can be practiced preferably in an embodiment comprising a terpene-phenol resin as the high softening point resin in an amount of 20 parts by mass or greater (preferably 35 parts by mass or greater, e.g., 40 parts by mass or greater) relative to 100 parts by mass of the base polymer. In usual, relative to 100 parts by mass of the base polymer, the terpene-phenol resin content is suitably 100 parts by mass or less, or preferably 80 parts by mass or less, for instance, 70 parts by mass or less.

< Low softening point resin>

As the low softening point resin, can be preferably used a resin having a softening point of 80 °C or above, but below 120 °C (more preferably 100 °C or above, but below 120 °C, e.g., 110 °C or above, but below 120 °C). When the softening point is too low, the peel property under a constant load may tend to turn out lower. When the softening point is too high, the adhesive strength to an adherend may tend to turn out lower.

The PSA disclosed herein can be made preferably in an embodiment comprising, as the low softening point resin, at least one of a petroleum resin and a terpene resin (typically an unmodified terpene resin) . For instance, can be preferably employed a composition wherein the primary component (i.e., a component accounting for more than 50 % by mass) of the low softening point resin is a petroleum resin, a terpene resin, a combination of a petroleum resin and a terpene resin, or the like. As the petroleum resin, can be preferably used a C5- based petroleum resin (which can be obtained typically by polymerizing a residue of a C5- fraction remaining after extracting and separating out isoprene and cyclopentadiene therefrom, with the C5- fraction being obtainable by decomposition of naphtha) . As the terpene resin, can be used preferably a polymer of a mono- terpene such as $\alpha$- pinene, $\beta$- pinene, limonene (including *d*- limonene, *l*-limonene, and *d/ l*- limonene (dipentene) ) , and the like. From the standpoint of the adhesive strength and the miscibility, it is preferable that the primary component of the low softening point resin is a terpene resin (e.g., poly- $\beta$- pinene) . Essentially all (e.g., 95 % by mass or more) of the low softening point resin can be a terpene resin.

The low softening point resin content can be, for instance, 10 to 120 parts by mass relative to 100 parts by mass of the base polymer, and it is usually suitable to be 15 to 90 parts by mass (e.g., 20 to 70 parts by mass). When the low softening point resin content is excessively low, the adhesive strength to an adherend may tend to turn out lower. When the low softening point resin content is excessively high, the adhesive strength (especially, the adhesive strength at a low temperature) may tend to turn out lower.

In usual, relative to 100 parts by mass of the base polymer, the tackifier resin content (the total of the low softening point resin and high softening point resin contents) is suitably 20 parts by mass or greater (typically 20 to 200 parts by mass), or preferably 30 to 150 parts by mass (e.g., 50 to 150 parts by mass). When the tackifier resin content is too high, the adhesive strength (especially, the adhesive strength at a low temperature) may tend to turn out lower. When the tackifier resin content is too low, the resistance (repulsion resistance, peel property under a constant load, etc.) against continuous stress may tend to turn out lower. It is preferable to use the low softening point resin and the high softening point resin at a mass ratio ([low softening point resin]:[high softening point resin]) of 1:5 to 3:1 (more preferably 1:5 to 2:1). The art disclosed herein can be practiced preferably in an embodiment where the high softening point resin content is higher than the low softening point resin content (e.g., an embodiment where the [low softening point resin]: [high softening point resin] mass ratio is 1:1.2 to 1:5). According to such an embodiment, can be obtained a PSA sheet that exhibits even higher resistance (e.g., peel property under a constant load) against continuous stress.

<Combination of terpene-phenol resins having different hydroxyl values>

The PSA composition disclosed herein can be practiced preferably in an embodiment comprising a base polymer consisting of a block copolymer of a mono-vinyl-substituted aromatic compound and a conjugated diene compound, and further comprising a tackifier resin, with the tackifier resin comprising at least terpene-phenol resin A and terpene-phenol resin B. Herein, terpene-phenol resin A and terpene-phenol resin B are typically selected such that terpene-phenol resin A and terpene-phenol resin B have hydroxyl values $A_{OH}$ (mgKOH/g) and $B_{OH}$ (mgKOH/g), respectively, with the values satisfying the inequality $A_{OH} > B_{OH}$. By using such terpene-phenol resins A and B in combination, for example, the peel strength (especially, the aged peel strength after aged) of the PSA sheet can be increased.

It is usually suitable to select terpene-phenol resins A and B such that the difference between their hydroxyl values $A_{OH}$ and $B_{OH}$, i.e., $A_{OH} - B_{OH}$, is larger than zero, but 200 mgKOH/g or smaller. In a preferable embodiment, $A_{OH} - B_{OH}$ is 5 mgKOH/g to 150 mgKOH/g (typically 10 mgKOH/g to 120 mgKOH/g, or more preferably 15 mgKOH/g to 100 mgKOH/g, e.g., 20 mgKOH/g up to 80 mgKOH/g).

The hydroxyl values of terpene-phenol resins A and B are not limited, respectively. For example, each of $A_{OH}$ and $B_{OH}$ can be 80 mgKOH/g or higher (typically 80 mgKOH/g to 250 mgKOH/g, preferably 80 mgKOH/g to 220 mgKOH/g, e.g., 90 mgKOH/g to 160 mgKOH/g), or each of $A_{OH}$ and $B_{OH}$ can be lower than 80 mgKOH/g (typically zero or higher, but lower than 80 mgKOH/g, or preferably 10 mgKOH/g or higher, but lower than 80 mgKOH/g, e.g., 20 mgKOH/g to 70 mgKOH/g). Alternatively, $A_{OH}$ can be 80 mgKOH/g or higher while $B_{OH}$ is lower than 80 mgKOH/g. In a preferable embodiment, $A_{OH}$ is 80 mgKOH/g or higher (typically 80 mgKOH/g to 160 mgKOH/g, or preferably 80 mgKOH/g to 140 mgKOH/g, e.g., 90 mgKOH/g to 120 mgKOH/g) while $B_{OH}$ is lower than 80 mgKOH/g (typically zero or higher, but lower than 80 mgKOH/g, or preferably 10 mgKOH/g or higher, but lower than 80 mgKOH/g, e.g., 20 mgKOH/g to 70 mgKOH/g), with $A_{OH} - B_{OH}$ being 10 mgKOH/g or larger (preferably 20 mgKOH/g or larger, e.g., 30 mgKOH/g or larger, but typically 100 mgKOH/g or smaller).

The terpene-phenol resins A and B contents can each be 1 part by mass or more relative to 100 parts by mass of the base polymer. In order to better bring out the effects of terpene-phenol resins A and B used together, it is suitable that each of the terpene-phenol resins A and B contents is 5 parts by mass or greater (preferably 10 parts by mass or greater, e.g., 15 parts by mass or greater) relative to 100 parts by mass of the base polymer. From the standpoint of the adhesive strength (especially, the adhesive strength at a low temperature) to an adherend, in usual, the terpene-phenol resins A and B contents combined are suitably 100 parts by mass or less, preferably 90 parts by mass or less, or more preferably 80 parts by mass or less (e.g., 70 parts by mass or less), all relative to 100 parts by mass of the base polymer. For instance, can be preferably employed an embodiment where the terpene-phenol resins A and B contents combined are 15 to 80 parts by mass (typically 25 to 60 parts by mass) relative to 100 parts by mass of the base polymer.

The mass ratio ($m_A:m_B$) of the terpene-phenol resin A content $m_A$ to the terpene-phenol resin B content $m_B$ can be, for instance, 1:10 to 10:1. From the standpoint of the balance between the adhesive strength (peel strength) to an adherend and the repulsion resistance (especially, the repulsion resistance under a hot/wet condition) or the peel property under a constant load (especially, the peel property under a constant load in a hot/wet condition), in usual, it is suitable that the mass ratio ($m_A:m_B$) is 1:5 to 5:1, for example, 1:3 to 3:1. In a preferable embodiment, $m_A$ and $m_B$ can be selected so as to obtain a mass ratio value $m_A/m_B$ of 0.7 to 10 (more preferably 0.8 to 5, typically 0.9 to 4, e.g., I to 3). According to such an embodiment, can be obtained a PSA sheet that exhibits excellent resistance against continuous stress as well as long-term stable adhesive properties (e.g., peel strength).

The softening points of terpene-phenol resins A and B are not limited, respectively. For example, each of terpene-phenol resins A and B can have a softening point of 120 °C or above (typically above 120 °C, preferably 125 °C or above, e.g., 130 °C or above, but typically 180 °C or below), or each can be below 120 °C. Alternatively, one of terpene-phenol resins A and B can have a softening point of 120 °C or above while the other has a softening point below 120 °C. In a preferable embodiment, each of terpene-phenol resins A and B has a softening point in a range of 120 °C to 170 °C. For example, can be used terpene-phenol resin A having a softening point of 120 °C to 170 °C and a hydroxyl value of 80 mgKOH/g to 140 mgKOH/g in combination with terpene-phenol resin B having a softening point of 120 °C to 170 °C and a hydroxyl value lower than 80 mgKOH/g (e.g., 20 mgKOH/g to 70 mgKOH/g).

The PSA composition disclosed herein may comprise, as the tackifier resin, another terpene-phenol resin besides terpene-phenol resins A and B. When the PSA composition comprises three or more species ofterpene-phenol resin, between the top two species selected in decreasing order of the amount contained based on the mass among all terpene-phenol resins, terpene-phenol resin A is the one having a higher hydroxyl value and terpene-phenol resin B is the one having a lower hydroxyl value. If three different species of terpene-phenol resin are contained at a mass ratio of 1 : 1: 1 with the three species accounting for the largest amounts based on the mass, terpene-phenol resin A is the one having the highest hydroxyl value and terpene-phenol resin B is the one having the lowest hydroxyl value among the three.

<Isocyanate compound>

The art disclosed herein can be practiced preferably in an embodiment where the PSA further comprises an isocyanate compound in addition to a base polymer and a tackifier resin. According to such an embodiment, the resistance against continuous stress (e.g., the repulsion resistance) can be further increased. As the isocyanate compound, can be used preferably a multifunctional isocyanate (which refers to a compound having an average of two or more isocyanate groups per molecule, including a compound having an isocyanurate structure). As the multifunctional isocyanate, can be used one, two or more species selected from various isocyanate compounds (polyisocyanates) containing two or more isocyanate groups per molecule. Examples of such a multifunctional isocyanate include aliphatic polyisocyanates, alicyclic polyisocyanates, aromatic polyisocyanates, and the like.

Examples of an aliphatic polyisocyanate include 1, 2- ethylene diisocyanate; tetramethylene diisocyanates such as 1, 2- tetramethylene diisocyanate, 1, 3- tetramethylene diisocyanate, 1, 4- tetramethylene diisocyanate, etc.; hexamethylene diisocyanates such as 1, 2- hexamethylene diisocyanate, 1, 3- hexamethylene diisocyanate, 1, 4- hexamethylene diisocyanate, 1, 5- hexamethylene diisocyanate, 1, 6- hexamethylene diisocyanate, 2, 5- hexamethylene diisocyanate, etc.; 2- methyl- 1, 5- pentane diisocyanate, 3- methyl- 1, 5- pentane diisocyanate, lysine diisocyanate, and the like.

Examples of an alicyclic polyisocyanate include isophorone diisocyanate; cyclohexyl diisocyanates such as 1,2-cyclohexyl diisocyanate, 1,3-cyclohexyl diisocyanate, 1,4-cyclohexyl diisocyanate, etc.; cyclopentyl diisocyanates such as 1,2-cyclopentyl diisocyanate, 1,3-cyclopentyl diisocyanate etc.; hydrogenated xylylene diisocyanate, hydrogenated tolylene diisocyanate, hydrogenated diphenylmethane diisocyanate, hydrogenated tetramethylxylene diisocyanate, 4,4'-dicyclohexylmethane diisocyanate, and the like.

Examples of an aromatic polyisocyanate include 2, 4- tolylene diisocyanate, 2, 6- tolylene diisocyanate, 4, 4'- diphenylmethane diisocyanate, 2, 4'- diphenylmethane diisocyanate, 2, 2'- diphenylmethane diisocyanate, 4, 4'- diphenylether diisocyanate, 2- nitrodiphenyl- 4, 4'- diisocyanate, 2, 2'- diphenylpropane- 4, 4'- diisocyanate, 3, 3'- dimethyldiphenylmethane- 4, 4'- diisocyanate, 4, 4'- diphenylpropane diisocyanate, m- phenylene diisocyanate, p- phenylene diisocyanate, naphthylene- 1, 4- diisocyanate, naphthylene- 1, 5- diisocyanate, 3, 3'- dimethoxydiphenyl- 4, 4'- diisocyanate, xylylene- 1, 4- diisocyanate, xylylene- 1, 3- diisocyanate and the like.

A preferable example of an isocyanate compound is a multifunctional isocyanate having an average of three or more isocyanate groups per molecule. Such a tri-functional or higher multifunctional isocyanate can be a multimer (typically a dimer or a trimer), a derivative (e.g., an addition product of a polyol and two or more multifunctional isocyanate molecules), a polymer or the like of a di-functional, tri-functional, or higher multifunctional isocyanate. Examples include multifunctional isocyanates such as a dimer and a trimer of a diphenylmethane diisocyanate, an isocyanurate (a cyclic trimer) of a hexamethylene diisocyanate, a reaction product of trimethylol propane and a tolylene diisocyanate, a reaction product of trimethylol propane and a hexamethylene diisocyanate, polymethylene polyphenyl isocyanate, polyether polyisocyanate, polyester polyisocyanate, and the like. Commercial multifunctional isocyanates include trade name "DURANATE TPA-100" available from Asahi Kasei Chemicals Corporation; trade names "CORONATE L", "CORONATE HL", "CORONATE HK", "CORONATE HX", "CORONATE 2096" available from Nippon Polyurethane Kogyo Co., Ltd.; and the like.

When an isocyanate compound is used, relative to 100 parts by mass of the base polymer, the used amount thereof is suitably more than zero part by mass, but 10 parts by mass or less (typically 0.01 to 10 parts by mass), or in usual, preferably 0.1 to 10 parts by mass (e.g., 0.5 to 5 parts by mass). With use of an isocyanate compound in such a range, can be obtained a PSA sheet having a particularly well-balanced properties. From the standpoint of the tightness (anchoring) between a substrate (e.g., a plastic film such as a polyethylene terephthalate (PET) film, etc.) and a PSA layer, an isocyanate is used preferably in an amount greater than 0.1 part by mass (e.g., 0.2 part by mass or greater, or more preferably 0.3 part by mass or greater) relative to 100 parts by mass of the base polymer. In a preferable embodiment of the art disclosed herein, from the standpoint of the balance between the anchoring to a substrate and the adhesive strength (peel strength) to an adherend, it is suitable to use an isocyanate in an amount greater than 0.1 part by mass, but equal to or less than 5 parts by mass (typically, 0.3 to 3 parts by mass, e.g., 0.5 to I part by mass) relative to 100 parts by mass of the base polymer.

The PSA in the art disclosed herein may comprise one, two or more species of rubbery polymer as necessary besides the base polymer. Such a rubbery polymer can be one of various polymers known in the PSA field, such as rubber-based polymers, acrylic polymers, polyester-based polymers, urethane-based polymers, polyether-based polymers, silicone-based polymers, polyamide-based polymers, fluorine-based polymers, and the like. For example, as a rubber-based rubbery polymer, can be used a suitable species among natural rubber, styrene-butadiene rubber (SBR), acrylonitrile-butadiene rubber (NBR), isoprene rubber, chloroprene rubber, polyisobutylene, butyl rubber, regenerated rubber, and the like. When such a rubbery polymer is used, in usual, its usage relative to 100 parts by mass of the base polymer is suitably 50 parts by mass or less, preferably 30 parts by mass or less, or more preferably 10 parts by mass or less (e.g., 5 parts by mass or less). The art disclosed herein can be practiced preferably in an embodiment essentially free of such a rubbery polymer (e.g., its content relative to 100 parts by mass of the base polymer is zero to 1 part by mass).

The PSA disclosed herein may contain as necessary various additives generally used in the PSA field, such as leveling agent, crosslinking agent, crosslinking co-agent, plasticizer, softening agent, filler, colorant (pigment, dye, etc.), anti-static agent, anti-aging agent, ultraviolet light absorber, antioxidant, photostabilizing agent, and so on. With respect to these various additives, those heretofore known can be used by typical methods. The art disclosed herein can be practiced preferably in an embodiment essentially free of a liquid rubber such as liquid polybutene, etc., (e.g.,

an embodiment where the liquid rubber content is 1 part by mass or less relative to 100 parts by mass of the base polymer, or an embodiment where the liquid rubber content is zero part by mass). According to such a PSA, can be obtained a PSA sheet that exhibits even better repulsion resistance and/or peel property under a constant load.

The PSA disclosed herein can be practiced preferably in an embodiment where the base polymer and tackifier resin contents combined are 90 % by mass or grater (typically 90 to 99.5 % by mass, e.g., 95 to 99 % by mass) of the PSA. The PSA can be practiced preferably in an embodiment essentially free of a chelate compound (e.g., an embodiment containing none or at most 1 % by mass of a chelate compound in the PSA). The chelate compound can be, for instance, a chelate complex of an alkaline earth metal oxide and a resin (an alkyl phenol resin, etc.) having a functional group (hydroxyl group, methylol group, etc.) capable of coordinating the oxide. According to such an embodiment, can be obtained a PSA sheet that exhibits even greater adhesive strength.

The form of the PSA composition disclosed herein is not particularly limited, and can be, for instance, a solvent based PSA composition containing a PSA (an adhesive component) having a composition described above in an organic solvent, a water- dispersed (typically, an aqueous emulsion- based) PSA composition containing a PSA dispersed in an aqueous solvent, a PSA composition of the hot- melt type. From the standpoint of the PSA's applicability and the latitude in the choice of a substrate, etc., a solvent- based or a water- dispersed PSA composition can be used preferably. For obtaining even greater adhesive properties, a solvent- based PSA composition is especially preferable. Such a solvent- based PSA composition can be prepared as a solution containing the respective components described above in an organic solvent. The organic solvent can be selected among known or conventional organic solvents. For instance, can be used any one species or a mixture of two or more species among aromatic compounds (typically aromatic hydrocarbons) such as toluene, xylene, etc.; acetic acid esters such as ethyl acetate, butyl acetate, etc.; aliphatic or alicyclic hydrocarbons such as hexane, cyclohexane, methyl cyclohexane, etc.; halogenated alkanes such as 1, 2- dichloroethane, etc.; ketones such as methyl ethyl ketone, acetyl acetone, etc.; and the like. While not particularly limited, in usual, the solvent- based PSA composition is suitably prepared to have a solids content (NV) of 30 to 65 % by mass (e.g., 40 to 55 % by mass) . Too low an NV tends to result in higher production costs while too high an NV may lower the workability such as the PSA's applicability, etc.

When the art disclosed herein is applied to a substrate-containing, double-faced or single-faced PSA sheet, a suitable substrate can be selected and used according to the intended purpose of the PSA sheet among plastic films such as polypropylene films, ethylene-propylene copolymer films, polyester films, polyvinyl chloride films, etc.; foam sheets made of foam such as polyurethane foam, polyethylene foam, polychloroprene foam, etc.; woven fabrics and non-woven fabrics (meaning to include paper such as Washi, high-grade paper, etc.) of a single species or a blend, etc., of various species of fibrous substances (which can be natural fibers such as hemp, cotton, etc.; synthetic fibers such as polyester, vinylon, etc.; semi-synthetic fibers such as acetate, etc.; and the like); metal foil such as aluminum foil, copper foil, etc.; and the like. The plastic film (typically referring to a non-porous plastic film, which should be conceptually distinguished from a woven fabric and a non-woven fabric) may be a non-stretched film, or a stretched (uni-axially stretched or bi-axially stretched) film. The substrate surface to be provided with a PSA layer may have been subjected to a surface treatment such as primer coating, corona discharge treatment, plasma treatment, or the like. While the thickness of the substrate can be suitably selected according to the purpose, in general, it is about 2 $\mu$m to 500 $\mu$m (typically 10 $\mu$m to 200 $\mu$m).

As a method for forming a PSA layer on a substrate, any of various heretofore known methods can be applied. Examples include a direct method where the PSA composition is directly applied to a substrate and dried, a transfer method where the PSA composition is applied on a suitable release surface and dried to form a PSA layer on the release surface so that the resulting PSA layer is adhered and transferred to a substrate, and other methods. These methods can be used in combination. The PSA composition can be applied, for instance, using a conventional coater such as gravure roll coater, reverse roll coater, kiss roll coater, dip roll coater, bar coater, knife coater, spray coater, or the like. From the standpoint of facilitating the crosslinking reaction and increasing the production efficiency, the PSA composition is dried preferably with heating. In usual, for example, the drying temperature is preferably about 40 °C to 120 °C. While not particularly limited, in usual, the thickness of the PSA layer is suitable to be about 4 $\mu$m to 150 $\mu$m (typically 20 $\mu$m to 120 $\mu$m, e.g., 30 $\mu$m to 100 $\mu$m). The substrate-containing double-faced PSA sheet can be constituted to comprise a PSA layer of such a thickness on each face of the substrate.

The PSA sheet disclosed herein typically has a 180° peel strength of 10 N/ 20mm or greater when measured in an environment at 23 °C and 50 % RH as follows: A sample is pressure- bonded to the surface of a stainless steel (SUS304) plate as the adherend by moving a 2 kg roller back and forth once, and after the sample on the SUS304 plate is left for 30 minutes, the 180° peel strength (N/ 20mm- width) is measured at a tensile speed of 300 mm/min based on JIS Z 0237. More specifically, it is measured in accordance with the 180° peel test described later in the Examples section. The 180° peel strength is preferably 15 N/ 20mm or greater, or more preferably 20 N/ 20mm or greater. Such a PSA sheet is preferable for purposes such as fastening of a resin component (resin blade 30 shown in Fig. 2, etc.) to another resin component (plastic molding 36 shown in Fig. 2, etc.) . A PSA sheet according to a preferable embodiment may have a 180° peel strength (N/ 20mm- width) of 25 N/ 20mm or greater (or even 30 N/ 20mm or greater) .

The PSA sheet disclosed herein has a floated length of 3 mm or smaller when measured using a plate of acrylonitrile-butadiene-styrene (ABS) copolymer resin as the adherend while applying the condition (C) in the repulsion resistance test described later in the Examples section. In a preferable embodiment, the floated length is 2 mm or smaller (e.g., 1 mm or smaller). The PSA sheet disclosed herein has a peeled length of 15 mm or smaller (typically 10 mm or smaller, or preferably 5 mm or smaller, e.g., 3 mm or smaller) when measured after subjected to a hot/wet condition for 18 hours while using an ABS plate as the adherend in the constant-load peel test described later in the Examples section.
Matters disclosed herein include the following:

(1) A PSA composition comprising a base polymer and a tackifier resin, wherein
the base polymer is a block copolymer of a mono-vinyl-substituted aromatic compound and a conjugated diene compound,
the tackifier resin comprises a low softening point resin having a softening point below 120 °C and a high softening point resin having a softening point of 120 °C or above, and
the high softening point resin comprises a terpene-phenol resin.
(2) The PSA composition according to (1) above, wherein the base polymer has a diblock fraction of 50 % or larger.
(3) The PSA composition according to (1) or (2) above, wherein the base polymer is a styrene-based block copolymer.
(4) The PSA composition according to any one of (1) to (3) above, wherein the base polymer consists of at least one of a styrene-isoprene block copolymer and a styrene-butadiene block copolymer.
(5) The PSA composition according to any one of (1) to (4) above, wherein 25 % by mass or more (typically, 25 % by mass or more, but 100 % by mass or less) of the high softening point resin is a terpene-phenol resin.
(6) The PSA composition according to any one of (1) to (5) above, wherein the terpene-phenol resin has a hydroxyl value of 80 mgKOH/g or higher (more preferably 110 mgKOH/g or higher).
(7) The PSA composition according to any one of (1) to (6) above, comprising the high softening point resin in an amount of 20 to 100 parts by mass relative to 100 parts by mass of the base polymer.
(8) The PSA composition according to any one of (1) to (7) above, wherein the low softening point resin comprises at least one of a petroleum resin and a terpene resin.
(9) The PSA composition according to any one of (1) to (8) above, further comprising a multifunctional isocyanate.
(10) The PSA composition according to (9) above, comprising 1 to 5 parts by mass of the multifunctional isocyanate relative to 100 parts by mass of the base polymer.
(11) A PSA sheet comprising a PSA layer formed from a PSA composition disclosed herein.

EXAMPLES

Several worked examples relating to the present invention are described below, but the present invention is not intended to be limited to these examples. In the description below, "parts" and "%" are based on the mass unless otherwise specified. The properties in the description below were measured or evaluated as follows.

(1) 180° peel test

From a double- faced PSA sheet, the release liner covering the first adhesive face was removed, and the exposed adhesive face was adhered to a polyethylene terephthalate (PET) film of 25 μm thickness for backing. The backed PSA sheet was cut into 20 mm wide by 100 mm long pieces to prepare specimens. In an environment at 23 °C and 50 % RH, the release liner covering the second adhesive face was removed from a specimen, and the exposed adhesive face was pressure- bonded to an adherend surface by moving a 2 kg roller back and forth once. The resultant was left in the same environment for 30 minutes, and based on JIS Z 0237, using a tensile tester, the 180° peel strength (N/ 20mm- width) was measured at a tensile speed of 300 mm/min.
With respect to four different adherends, namely, a stainless steel (SUS304) plate, an ABS plate (available from Shin-Kobe Electric Machinery Co., Ltd.) , a high- impact polystyrene (HIPS) plate (available from Nippon Testpanel Co., Ltd.) and a polycarbonate (PC) /ABS blend resin plate (available from Nippon Testpanel Co., Ltd.) , the adhesive strength as the 180° peel strength (N/ 20mm) was measured according to the procedures described above.

(2) Repulsion resistance test

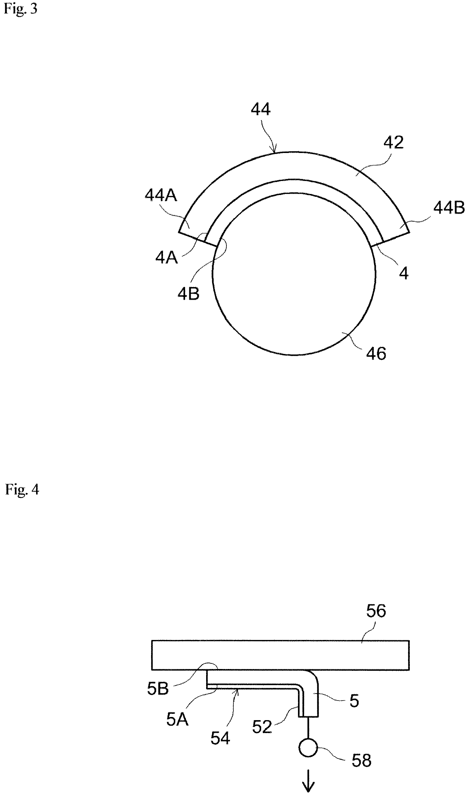

Using an aluminum cylinder of 24 mm diameter as an adherend, the repulsion resistance of each double-faced PSA sheet was evaluated. In particular, first adhesive face 4A of double-faced PSA sheet 4 was adhered to PET film 42 of 300 μm thickness for backing (see Fig. 3). The backed PSA sheet 4 was cut into a piece of 10 mm wide by 40 mm long to prepare specimen 44. In an environment at 23 °C and 50 % RH, as shown in Fig. 3, second adhesive face 4B of specimen 44 was adhered to adherend (aluminum cylinder) 46 by moving a 2 kg roller back and forth once, with the length of specimen 44 wrapping around the cylinder circumference. It is noted that adherend 46 was cleaned with ethanol prior to use. Such a specimen was left under each of conditions (A) to (C) indicated below, and subsequently, it was observed whether or not two edges 44A and 44B of the length direction of specimen 44 peeled off from and floated above the surface of adherend 46. When any floating was observed, the floated length (the length of a segment in specimen 44 that floated (peeled) off from the surface of adherend 46) was measured. When the both edges floated, the average value of the floated length of the two edges was determined as the floated length of the specimen.

(A) at room temperature (23 °C, 50 % RH) for 24 hours.
(B) at 70 °C, 80 % RH for 4 hours.
(C) at 70 °C, 80 % RH for 12 hours.

(3) Canstant-load peel test

First adhesive face 5A of double-faced PSA sheet 5 was adhered to PET film 52 of 25 μm thickness for backing (see Fig. 4). The backed PSA sheet 5 was cut into a piece of 10 mm wide by 100 mm long to prepare specimen 54. In an environment at 23 °C and 50 % RH, second adhesive face 4B of specimen 54 was adhered to the surface of adherend 56 by moving a 2 kg roller back and forth once. This was left in the same environment for 30 minutes. Subsequently, in an environment at 23 °C and 50 % RH, as shown in Fig. 4, adherend 56 was horizontally held so that the surface having specimen 54 faced down. Load 58 of 300 g (2.9N) was placed on one end of specimen 54 so as to have a peel angle of 90°, and after a lapse of 24 hours, the peeled length was measured. With respect to three different adherends, namely, an ABS plate (available from Shin-Kobe Electric Machinery Co., Ltd.), a PC/ABS blend resin plate (available from Nippon Testpanel Co., Ltd.) and a HIPS plate (available from Nippon Testpanel Co., Ltd.), according to the procedures described above, the peel property (peeled length) under a constant load in a normal condition was evaluated.

Similarly, in an environment at 23 °C and 50 % RH, a specimen was pressure-bonded to an adherend and left in the same environment for 30 minutes. Subsequently, in an environment at 50 °C and 80 % RH (under a hot/wet condition), the adherend was horizontally held so that the surface having the specimen faced down. A load of 100 g (0.98 N) was placed on one end of the specimen so as to have a peel angle of 90°, and after a lapse of 18 hours, the peeled length was measured. With respect to an ABS plate (available from Shin-Kobe Electric Machinery Co., Ltd.) and a HIPS plate (available from Nippon Testpanel Co., Ltd.), according to the procedures described above, the peel property (peeled length) under a constant load in a hot/wet condition was evaluated.

<Experimental Example 1>

At the ratio shown in Table 1, a styrene-isoprene block copolymer (product name "SIS5505" available from JSR Corporation; "diblock fraction 50 %, styrene content 16 %), a C5-based petroleum resin (product name "QUINTONE® U-185" (or abbreviated to "U-1 85" hereinafter) available from Nippon Zeon Corporation; softening point 86 °C, hydroxyl value < 1 mgKOH/g) as a low softening point resin, a terpene-phenol resin (product name "S 145" available from Yasuhara Chemical Co., Ltd.; softening point 145 °C, hydroxyl value 100 mgKOH/g) and/or a rosin ester (product name "D125" available from Arakawa Chemical Industries, Ltd.; softening point 125 °C, hydroxyl value 40 mgKOH/g) as a high softening point resin, and toluene as a solvent were mixed with stirring to prepare each of PSA compositions a1 to a6, with 50 % NV each.

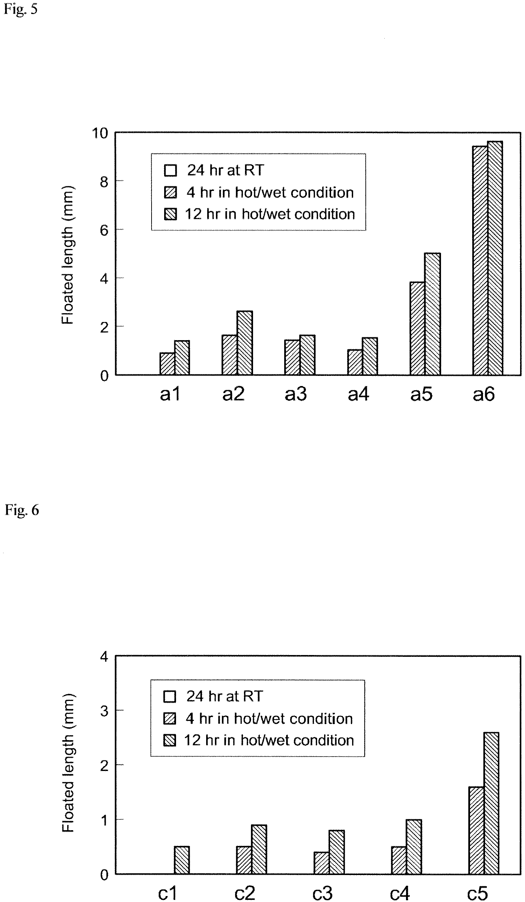

Each of PSA compositions a1 to a6 was applied to a first face of a substrate (a PET film under trade name "Lumirror S-10" available from Toray Industries, Inc.) of 12 μm thickness and dried at 120 °C for 3 minutes to form a PSA layer of 64 μm thickness. To the PSA layer, was adhered a release liner pre-treated with a silicone-based release agent. Subsequently, to the second face (opposite to the first face) of the PET film, in the same manner as the first face, a PSA layer of 64 μm thickness was formed, and a release liner was adhered thereto. As such, double-faced PSA sheets a1 to a6 corresponding to the respective PSA compositions a1 to a6 were fabricated, respectively. The summary of the compositions and test results of respective double-faced PSA sheets are shown in Table 1. Fig. 5 shows a chart of the results of the repulsion resistance test.

[Table 1]

Table 1

|  |  | a1 | a2 | a3 | a4 | a5 | a6 |
|---|---|---|---|---|---|---|---|
| Base polymer (parks) | SIS5505 | 100 | 100 | 100 | 100 | 100 | 100 |
|  |  |  |  |  |  |  |  |

(continued)

| | | a1 | a2 | a3 | a4 | a5 | a6 |
|---|---|---|---|---|---|---|---|
| Low softening point resin (parts) | C5-based U185 | 40 | 30 | 20 | 20 | 40 | 40 |
| | | | | | | | |
| High softening point resin (parts) | Terpene-phenol | 40 | 40 | 40 | 20 | 30 | 0 |
| | Rosin ester | 0 | 0 | 0 | 40 | 0 | 40 |
| | | | | | | | |
| Isocyanate (parts) | CORONATE L | none | nonce | none | none | none | none |
| | | | | | | | |
| 180° peel strength (N/20mm) | SUS | 28 | 30 | 27 | 25 | 29 | 26 |
| | ABS | 21 | 27 | 27 | 24 | 26 | 25 |
| | HIPS | 27 | 29 | 27 | 23 | 26 | 26 |
| | | | | | | | |
| Repulsion resistance (mm) | 24hr at RT | 0.0 | 0.0 | 0.0 | 0.0 | 0.0 | 0.0 |
| | 4hr at 70°C, 80%RH | 0.9 | 1.6 | 1.4 | 1.0 | 3.8 | 9.4 |
| | 12hr at 70°C, 80%RH | 1.4 | 2.6 | 1.6 | 1.5 | 5.0 | 9.6 |
| | | | | | | | |
| Peel under constant load (mm) 24hr at 23°C, 50%RH | ABS | 6.3 | 1.6 | 1.5 | 2.8 | >25 | 5.8 |
| | PC/ABS | 10.3 | 4.8 | 3.3 | 2.6 | 22.5 | 7.5 |
| | HIPS | 13.3 | 9.3 | 11.8 | 6.3 | 15.0 | 9.3 |

As shown in these Table I and Fig. 5, with respect to double-faced PSA sheets a1 to a3 and a5 each using solely a terpene-phenol resin as the high softening point resin, when compared to double-faced PSA sheet a6 using solely a rosin ester as the high softening point resin, they all exhibited clearly higher repulsion resistance under a hot/wet condition. Similarly, with respect to a4 using as the high softening point resin a terpene-phenol resin and a rosin ester at a mass ratio of 1:2, a remarkable increase was observed in the repulsion resistance in comparison to double-faced PSA sheet a6. With respect to a1 to a4 using a total of more than 30 parts (e.g., 35 parts or more, but 60 parts or less) of high softening point resin relative to 100 parts of the base polymer, even greater increases were obtained in their repulsion resistance. With respect to a2 to a4 each having a value larger than 1 (e.g., 1.2 or larger, but 5.0 or smaller), they all exhibited greater peel properties under a constant load when compared to a1, a5 and a6 each having a value of 1 or smaller for the said ratio.

<Experimental Example 2>

PSA compositions d1 to d13 were prepared, respectively, using styrene-isoprene block copolymers (shown as "SIS'" in Tables) or styrene-butadiene block copolymers (shown as "SBS" in Tables) having the diblock fractions and the styrene contents shown in Tables 2 and 3. In particular, at the ratio shown in Table 2 or 3, a prescribed styrene-based copolymers, a C5-based petroleum resin (product name "U-185" available from Nippon Zeon Corporation) as a low softening point resin, a terpene-phenol resin (product name "S 145" available from Yasuhara Chemical Co., Ltd.) as a high softening point resin, and toluene as a solvent were mixed with stirring to prepare each of PSA compositions b1 to b13, with 50 % NV each. Styrene-based block copolymers used in b1, b6, b8, b9 and b12 are available from JSR Corporation. Styrene-based block copolymers used in b2 to b5, b7, b10 and b11 are available from Kraton Polymers Japan, Ltd. The styrene-based block copolymer used in b13 is available from Nippon Zeon Corporation. Using PSA compositions b1 to b13, in the same manner as Experimental Example 1, double-faced PSA sheets b 1 to b 13 were fabricated. The summary of the compositions and test results of the respective double-faced PSA sheets are shown in Tables 2 and 3.

[Table 2]

Table 2

| | | b1 | b2 | b3 | b4 | b5 | b6 |
|---|---|---|---|---|---|---|---|
| Base polymer | Product Name | SIS5505 | D1113 | D1119 | DKX405 | D1153 | SIS5002 |
| | Polymer | SIS | SIS | SIS | SBS | SBS | SIS |
| | Diblock ratio (%) | 50 | 56 | 66 | <1 | 5 | 15 |
| | Styrene content (%) | 16 | 16 | 22 | 24 | 29 | 22 |
| | Amount (parts) | 100 | 100 | 100 | 100 | 100 | 100 |
| | | | | | | | |
| Low softening point resin (parts) | C5-based U185 | 40 | 30 | 30 | 40 | 40 | 40 |
| | | | | | | | |
| High softening point resin (parts) | Terpene-phenol | 40 | 40 | 40 | 40 | 40 | 40 |
| | | | | | | | |
| Isocyanate (parts) | CORONATE L | none | none | none | none | none | none |
| | | | | | | | |
| 180° peel strength (N/20mm) | SUS | 28 | 29 | 26 | 16 | 16 | 20 |
| | ABS | 21 | 25 | 21 | 13 | 14 | 15 |
| | HIPS | 27 | 26 | 24 | 15 | 16 | 19 |
| | | | | | | | |
| Repulsion resistance (mm) | 24hr at RT | 0.0 | 0.0 | 0.0 | 0.0 | 0.0 | 0.0 |
| | 4hr at 70°C, 80%RH | 0.9 | 0.6 | 0.8 | 3.6 | 2.3 | 4.4 |
| | 12hr at 70°C, 80%RH | 1.4 | 1.3 | 1.1 | 4.4 | 2.8 | 4.8 |
| | | | | | | | |
| Peel under constant load (mm) 24hr at 23°C, 50%RH | ABS | 6.3 | 1.5 | 1.5 | 1.9 | 0.0 | 0.1 |
| | PC/ABS | 10.3 | 3.0 | 2.5 | 1.1 | 0.6 | 1.0 |
| | HIPS | 13.3 | 9.0 | 7.0 | 15.9 | 3.0 | 1.8 |

[Table 3]

Table 3

| | | b7 | b8 | b9 | b10 | b11 | b12 | b13 |
|---|---|---|---|---|---|---|---|---|
| Base polymer | Product Name | D1161 | SIS5200 | SIS5250 | D1117 | 1163 | SIS5403 | 3520 |

(continued)

| | | b7 | b8 | b9 | b10 | b11 | b12 | b13 |
|---|---|---|---|---|---|---|---|---|
| | Polymer | SIS | SIS | SIS | SIS | SIS | SIS | SIS |
| | Diblock ratio (%) | 19 | 20 | 30 | 33 | 38 | 40 | 78 |
| | Styrene content (%) | 15 | 15 | 20 | 17 | 15 | 15 | 15 |
| | Amount (parts) | 100 | 100 | 100 | 100 | 100 | 100 | 100 |
| | | | | | | | | |
| Low softening point resin (parts) | C5-based U185 | 40 | 40 | 40 | 30 | 30 | 40 | 30 |
| | | | | | | | | |
| High softening point resin (parts) | Terpene-phenol | 40 | 40 | 40 | 40 | 40 | 40 | 40 |
| | | | | | | | | |
| Isocyanate (parts) | CORONATE L | none | none | none | none | none | none | none |
| | | | | | | | | |
| 180° peel strength (N/ 20mm) | SUS | 22 | 22 | 22 | 26 | 26 | 26 | 32 |
| | ABS | 17 | 16 | 17 | 20 | 21 | 20 | 34 |
| | HIPS | 20 | 20 | 20 | 22 | 24 | 25 | 40 |
| | | | | | | | | |
| Repulsion resistance (mm) | 24hr at RT | 0.0 | 0.0 | 0.0 | 0.0 | 0.0 | 0.0 | 0.3 |
| | 4hr at 70°C, 80%RH | 9.3 | 9.5 | 0.8 | 2.5 | 3.3 | 3.0 | 0.5 |
| | 12hr at 70°C, 80%RH | 10.3 | 9.6 | 1.4 | 4.3 | 4.5 | 3.9 | 0.8 |
| | | | | | | | | |
| Peel under constant load (mm) 24hr at 23°C, 50%RH | ABS | 1.0 | 2.0 | 2.6 | 2.0 | 3.5 | 19.1 | 10 |
| | PC/ABS | 2.0 | 4.1 | 4.3 | 3.0 | 6.0 | 19.3 | 10 |
| | HIPS | 19.0 | 5.4 | 4.8 | 9.0 | 14.5 | 19.0 | 12 |

As shown in Tables 2 and 3, with respect to double-faced PSA sheets b1 to b3 and b13 each using as the base polymer a styrene-isoprene block copolymer having a diblock fraction of 30 to 80 % (more preferably 50 to 80 %), they had a tendency to exhibit greater repulsion resistance (especially under a hot/wet condition) when compared to double-faced PSA sheets with lower diblock fractions.

<Experimental Example 3: Use of isocyanate compound>

At the ratio shown in Table 4, a styrene-isoprene block copolymer (product name "SIS5505" available from JSR Corporation), a C5-based petroleum resin (product name "U-185" available from Nippon Zeon Corporation) as a low softening point resin, a terpene-phenol resin (product name "S 145" available from Yasuhara Chemical Co., Ltd.) as a high softening point resin, an isocyanate compound (product name "CORONATE L" available from Nippon Polyurethane Kogyo Co., Ltd), and toluene as a solvent were mixed with stirring to prepare each of PSA compositions c1 to c4, with 50 % NV each. In the same manner as described above, but excluding the isocyanate compound, PSA composition c5 was prepared. Using PSA compositions c1 to c5, in the same manner as Experimental Example 1, double-faced PSA sheets c1 to c5 were fabricated. The summary of the compositions and test results of the respective double-faced PSA sheets are shown in Table 4. Fig. 6 shows a chart of the results of the repulsion resistance test.
[Table 4]

Table 4

| | | c1 | c2 | c3 | c4 | c5 |
|---|---|---|---|---|---|---|
| Base polymer (parts) | SIS5505 | 100 | 100 | 100 | 100 | 100 |
| Low softening point resin (parts) | C5-based U185 | 30 | 30 | 30 | 30 | 30 |
| High softening point resin (parts) | Terpene-phenol | 40 | 40 | 40 | 40 | 40 |
| Isocyanate (parts) | CORONATE L | 1 | 2 | 3 | 5 | 0 |
| 180° peel strength (N/20mm) | SUS | 26 | 26 | 22 | 22 | 26 |
| | ABS | 23 | 22 | 18 | 18 | 23 |
| | HIPS | 24 | 24 | 20 | 19 | 26 |
| Repulsion resistance (mm) | 24hr at RT | 0.0 | 0.0 | 0.0 | 0.0 | 0.0 |
| | 4hr at 70°C, 80%RH | 0.0 | 0.5 | 0.4 | 0.5 | 1.6 |
| | 12hr at 70°C, 80%RH | 0.5 | 0.9 | 0.8 | 1.0 | 2.6 |
| Peel under constant load (mm) 24hr at 23°C, 50%RH | ABS | - | 2.0 | 1.0 | 2.0 | 1.5 |
| | PC/ABS | - | 3.3 | 1.5 | 7.5 | 3.0 |
| | HIPS | - | 5.5 | 4.0 | 12.0 | 4.5 |

As shown in Table 4 and Fig. 6, with respect to double-faced PSA sheets c1 to c4 using 1 to 5 parts of an isocyanate compound relative to 100 parts of a styrene-based block copolymer, when compared to double-faced PSA sheet c5 using no isocyanate compound, further increases were observed in their repulsion resistance under a hot/wet condition. PSA sheets c3 and c4 each using 3 parts or more of an isocyanate compound had a tendency to have somewhat decreased 180° peel strength values. These results suggest that for the intended purposes where the 180° peel strength is important, an isocyanate compound can be used preferably in an amount ranging up to 2.5 parts (typically from 0.3 to 2.5 parts, e.g., about from 0.5 to 2.5 parts) relative to 100 parts of a styrene-based copolymer.

<Experimental Example 4: Investigation of low softening point resin>

At the ratio shown in Table 5, a styrene-isoprene block copolymer (product name "SIS5505" available from JSR Corporation), a low softening point resin, a terpene-phenol resin (product name "S 145" available from Yasuhara Chemical Co., Ltd.) as a high softening point resin, an isocyanate compound (product name "CORONATE L" available from Nippon Polyurethane Kogyo Co., Ltd.; 13.6 % isocyanate content), and toluene as a solvent were mixed with stirring to prepare each of PSA compositions d1 to d7, with 50 % NV each. As the low softening point resin, was used either product name "U-1 85" (a C5-based petroleum resin) available from Nippon Zeon Corporation, product name "S-100" (a C5-based petroleum resin; softening point 94 °C, hydroxyl value < 1 mgKOH/g) available from Nippon Zeon Corporation, or product name "PX1150N" (a terpene resin; softening point 1115 °C, hydroxyl value < 1 mgKOH/g) available from Yasuhara Chemical Co., Ltd. Using PSA compositions d1 to d7, in the same manner as Experimental Example 1, double-faced PSA sheets d1 to d7 were fabricated. The summary of the compositions and test results of these double-faced PSA sheets are shown in Table 5.

[Table 5]

Table 5

| | | d1 | d2 | d3 | d4 | d5 | d6 | d7 |
|---|---|---|---|---|---|---|---|---|
| Base polymer (parts) | SIS5505 | 100 | 100 | 100 | 100 | 100 | 100 | 100 |
| | | | | | | | | |
| Low softening point resin (parts) | C5-based U185 | 30 | 0 | 0 | 0 | 0 | 0 | 0 |
| | C5-based S100 | 0 | 30 | 0 | 0 | 0 | 0 | 0 |
| | Terpene PX1150N | 0 | 0 | 30 | 40 | 60 | 80 | 100 |
| | | | | | | | | |
| High softening point resin (parts) | Terpene-phenof | 40 | 40 | 40 | 40 | 40 | 40 | 40 |
| | | | | | | | | |
| Isocyanate (parts) | CORONATE L | 2 | 2 | 2 | 2 | 2 | 2 | 2 |
| | | | | | | | | |
| 180° peel strength (N/20mm) | SUS | 25 | 25 | 25 | 28 | 33 | 39 | 43 |
| | ABS | 22 | 22 | 21 | 23 | 27 | 31 | 33 |
| | HIPS | 22 | 22 | 22 | 25 | 28 | 32 | 33 |
| | | | | | | | | |
| Repulsion resistance (mm) | 24hr at RT | 0.0 | 0.0 | 0.0 | 0.0 | 0.0 | 0.0 | 0.0 |
| | 4hr at 70°C, 80%RH | 0.0 | 0.0 | 0.0 | 0.5 | 0.5 | 0.5 | 0.5 |
| | 12hr at 70°C, 80%RH | 0.8 | 0.6 | 0.6 | 0.6 | 0.8 | 0.6 | 0.8 |
| | | | | | | | | |
| Peel under constant load (mm) 24hr at 23°C, 50%RH | ABS | 2.0 | 1.8 | 2.3 | 2.5 | 3.5 | 4.0 | 4.5 |
| | PC/ABS | 3.3 | 4.0 | 6.0 | 4.5 | 6.0 | 6.0 | 4.5 |
| | HIPS | 5.5 | 8.3 | 9.5 | 6.5 | 7.0 | 5.0 | 8.3 |

As shown in Table 5, with respect to double-faced PSA sheets d3 to d7 each using a terpene resin as the low softening point resin, when compared to d1 and d2 using a C5-based petroleum resin as the low softening point resin, they all had a tendency to exhibit greater peel strength. The peel strength tended to increase as the amount of low softening point resin relative to 100 parts of the base polymer increased. However, from the stand point of the balance between the repulsion resistance and the peel property under a constant load, better results were obtained with d3 to d5 each using a low softening point resin in an amount of 80 parts or less (e.g., 60 parts or less). Particularly good results were obtained with d4 and d5 each using a low softening point resin in an amount greater than 30 parts, but less than 80 parts (e.g., 35 parts or greater, but less than 70 parts).

<Experimental Example 5: Investigation of high softening point resin>

At the ratio shown in Table 6, a styrene-isoprene block copolymer (product name "SIS5505" available from JSR Corporation), a C5-based petroleum resin (product name "U-185" available from Nippon Zeon Corporation) as a low softening point resin, a high softening point resin, an isocyanate compound (product name "CORONATE L" available from Nippon Polyurethane Kogyo Co., Ltd.), and toluene as a solvent were mixed with stirring to prepare each of PSA compositions e1 to e7, with 50 % NV each. As the high softening point resins, were used the various terpene phenol resins (products all available from Yasuhara Chemical Co., Ltd.) having the respective softening points and hydroxyl values shown in Table 6. Using PSA compositions e1 to e7, in the same manner as Experimental Example 1, double-faced PSA sheets e1 to e7 were fabricated. The summary of the compositions and test results of the respective double-faced PSA sheets are shown in Table 6. Fig. 7 shows a chart of the results of the repulsion resistance test.

[Table 6]

Table 6

| | | e1 | e2 | e3 | e4 | e5 | e6 | e7 |
|---|---|---|---|---|---|---|---|---|
| Base polymer (parts) | SIS5505 | 100 | 100 | 100 | 100 | 100 | 100 | 100 |
| Low softening point resin (parts) | Terpene PX1150N | 30 | 30 | 30 | 30 | 30 | 30 | 30 |
| High softening point resin (Terpene-phenol) | Product Name | T145 | T160 | S145 | G150 | G120 | N125 | K145 |
| | Softening point (°C) | 145 | 160 | 145 | 150 | 120 | 125 | 145 |
| | OH value (mgKOH/g) | 60 | 60 | 100 | 130 | 130 | 160 | 200 |
| | Amount (parts) | 40 | 40 | 40 | 40 | 40 | 40 | 40 |
| Isocyanate (parts) | CORONATE L | 2 | 2 | 2 | 2 | 2 | 2 | 2 |
| 180° peel strength (N/20mm) | SUS | 27.5 | 24.5 | 24.5 | 21.5 | 20.5 | 18 | 14 |
| | ABS | 21.5 | 22 | 20.5 | 20.5 | 20 | 19.5 | 14.5 |
| | PC/ABS | 23.5 | 22 | 22.5 | 19 | 19 | 17.5 | 15 |
| | HIPS | 22.5 | 23.5 | 22 | 19.5 | 19 | 17.5 | 14.5 |
| Repulsion resistance (mm) | 24hr at RT | 0.1 | 0.2 | 0.0 | 0.0 | 0.0 | 0.0 | 0.0 |
| | 4hr at 70°C, 80%RH | 0.0 | >4 | 0.0 | 0.1 | 0.1 | 0.1 | 0.1 |
| | 12hr at 70°C, 80%RH | >4 | >4 | 0.6 | 0.1 | 0.2 | 0.6 | 0.3 |
| Peel under constant load (mm) 24hr at 23°C, 50%RH | ABS | 9.5 | 19 | 3.5 | 2.5 | 24 | 2 | >50 |
| | PC/ABS | 10.5 | 18 | 9 | 4.25 | 24.5 | 2 | 34 |
| | HIPS | 20 | 29.5 | 12.5 | 27.5 | >50 | 5.5 | >50 |
| Peel under constant load (mm) 18hr at 50°C, 80%RH, hot/wet | ABS | >25 | >25 | 2.8 | 0.5 | 0.8 | 1.3 | 1.0 |
| | HIPS | >25 | >25 | 2.0 | 0.8 | 1.5 | 2.0 | 1.8 |

As shown in Table 6 and Fig. 7, with respect to double-faced PSA sheets e3 to e7 each using as the high softening point resin a terpene-phenol resin having a hydroxyl value of 80 mgKOH/g or higher (more specifically, 80 to 250 mg KOH/g), when compared to double-faced PSA sheets e1 and e2 each using a terpene-phenol resin having a hydroxyl value of 60 mgKOH/g or lower, they all exhibited clearly higher resistance against continuous stress. In particular, with respect to the repulsion resistance and the peel property under a constant load in a hot/wet condition, notable effects were observed by use of a terpene-phenol resin having a hydroxyl value of 80 mgKOH/g or higher (e.g., 100 mgKOH/g or higher). With respect to e4 to e7 using a terpeno-phenol resin having a hydroxyl value of 110 mgKOH/g or higher, even better results were obtained.

<Experimental Example 6>

At the ratio shown in Table 7, a styrene-isoprene block copolymer (product name "QUINTAC 3520" available from Nippon Zeon Corporation; 78 % diblock fraction, 15% styrene content) as a base polymer, a terpene-phenol resin (product name "S145" available from Yasuhara Chemical Co., Ltd.) having a hydroxyl value of 100 mgKOH/g, a terpene resin (product name "PX1150N" available from Yasuhara Chemical Co., Ltd.), an isocyanate compound (product name "CORONATE L" available from Nippon Polyurethane Kogyo Co., Ltd.), and toluene as a solvent were mixed with stirring to prepare each of PSA compositions f1 to f6, with 50 % NV each. Using PSA compositions f1 to f6, in the same manner as Experimental Example 1, were fabricated double-faced PSA sheets f1 to f6 comprising a PSA layer on each face of a PET film (substrate).

The summary of the compositions and test results of the respective double-faced PSA sheets are shown in Table 7.

In Table 7, the peel property under a constant load were measured using a ABS plate (available from Shin-Kobe Electric Machinery Co., Ltd.) as the adherend. "Peel mode" for the peel property under a constant load refers to the mode of peeling visually observed by the test operator with respect to the portion peeled off from the adherend. For the "Peel mode" in Table 7, "Interfacial" indicates the mode, as in the example shown in Fig. 4, where peeling of PSA sheet (specimen) 5 occurred at the interface between adherend 56 and adhesive face 5B, that is, a mode where specimen 5 peeled off without leaving any adhesive residue on the surface of adherend 56. On the contrary, "Anchoring" indicates the mode where peeling occurred at the interface between the PSA layer on the side of adhesive face 5B and the substrate (substrate 15 in Fig. 1; a PET film of 12 μm thickness in the present experimental example) of PSA sheet 5, that is, a mode where specimen 5 peeled off leaving the PSA layer on the side of adhesive face 5B on the surface of adherend 56.

[Table 7]

Table 7

|  |  | f1 | f2 | f3 | f4 | f5 | f6 |
|---|---|---|---|---|---|---|---|
| Base polymer (parts) | Quintac 3520 | 100 | 100 | 100 | 100 | 100 | 100 |
|  |  |  |  |  |  |  |  |
| Low softening point resin (parts) | Terpene PX1150N | 30 | 30 | 30 | 30 | 30 | 30 |
|  |  |  |  |  |  |  |  |
| Hydroxyl-rich tackifier resin (parts) | Terpene-phenol S145 (100 mgKOH/g) | 40 | 40 | 40 | 40 | 40 | 40 |
|  |  |  |  |  |  |  |  |
| Isocyanate (parts) | CORONATE L | none | 0.1 | 0.4 | 0.7 | 1.0 | 2 |
|  |  |  |  |  |  |  |  |

(continued)

|  | | f1 | f2 | f3 | f4 | f5 | f6 |
|---|---|---|---|---|---|---|---|
| 180° peel strength (N/ 20mm) | SUS | 36 | 36 | 32 | 32 | 28.5 | 26.5 |
| | | | | | | | |
| Peel under constant load 24hr at 23°C, 50%RH | Peel mode | Anchoring | Anchoring | Interfacial | Interfacial | Interfacial | Interfacial |

As shown in Table 7, with respect to double-faced PSA sheets f1 and f2 each using none or at most 0.1 part of an isocyanate compound, peeling occurred by the anchoring mode in the constant-load peel test. On the other hand, with respect to double-faced PSA sheets f3 to f6 each using more than 0.1 part (more specifically, at least 0.3 part) of an isocyanate compound, peeling occurred by the interfacial mode in the peel test under a constant load. These results indicate that the anchoring of the PSA on the substrate (herein, a PET film) was improved in double-faced PSA sheets f3 to f6. On the other hand, when the amount of an isocyanate compound increased, the peel strength tended to decrease. The results shown in Table 7 indicates that with respect to the compositions according to the present experimental example, when an isocyanate compound was used in a amount ranging above 0.3 part to below 1.0 part, high levels of PSA anchoring and peel strength were attained at the same time.

< Experimental Example 7>

At the ratio shown in Table 8, a styrene-isoprene block copolymer (product name '"QUINTAC 3520" available from Nippon Zeon Corporation) as a base polymer, a terpene-phenol resin (product name "S 145" available from Yasuhara Chemical Co., Ltd.) having a hydroxyl value of 100 mgKOH/g, a terpene-phenol resin (product name "T145" available from Yasuhara Chemical Co., Ltd.) having a hydroxyl value of 60 mgKOH/g, a terpene resin (product name "PX1150N" available from Yasuhara Chemical Co., Ltd.), an isocyanate compound (product name "CORONATE L" available from Nippon Polyurethane Kogyo Co., Ltd.), and toluene as a solvent were mixed with stirring to prepare each of PSA compositions g1 to g5, with 50 % NV each. Using PSA compositions g1 to g5, in the same manner as Experimental Example 1, were fabricated double-faced PSA sheets g1 to g5 comprising a PSA layer on each face of a PET film (substrate).
In PSA compositions g2 to g4, the terpene-phenol resin having a hydroxyl value of 100 mgKOH/g (S 145) corresponds to terpene-phenol resin A while the terpene-phenol resin having a hydroxyl value of 60 mgKOH/g (T145) corresponds to terpene-phenol resin B.
The summary of the compositions and test results of the respective double-faced PSA sheets are shown in Table 8.
For each PSA sheet, the 180° peel test was performed using a stainless steel (SUS304) plate as the adherend, with respect to a specimen prior to storage (i.e., the initial PSA sheet) and specimens that had been stored under the following conditions, respectively: at 23 °C and 50 % RH for 7 days (7 day storage at RT), at 23 °C and 50 % RH for 14 days (14 day storage at RT), at 40 °C and 92 % RH (hodwet condition) for 3 days and subsequently placed at 23 °C and 50 % RH (3 day storage at 40 °C, 92 % RH), at 40 °C and 92 % RH (hot/wet condition) for 7 days and subsequently placed at 23 °C and 50 % RH (7 day storage at 40 °C, 92 % RH), and at 40 °C and 92 % RH (hot/wet condition) for 14 days and subsequently placed at 23 °C and 50 % RH (14 day storage at 40 °C, 92 % RH). The peel property under a constant load was evaluated by measuring in an environment at 50 °C and 80 % RH (hot/wet condition) the peeled length of a specimen after a lapse of 24 hours instead of 18 hours from the application of a 100 g (0.98 N) load on one end of the specimen in the canstant-load peel test.
[Table 8]

Table 8

|  | | g1 | g2 | g3 | g4 | g5 |
|---|---|---|---|---|---|---|
| Base polymer (parts) | Quintac 3520 | 100 | 100 | 100 | 100 | 100 |
| | | | | | | |

(continued)

| | | g1 | g2 | g3 | g4 | g5 |
|---|---|---|---|---|---|---|
| Low softening point resin (parts) | Terpene PX1150N | 30 | 30 | 30 | 30 | 30 |
| High softening point resin (parts) | Terpene-phenol S145 (100mgKOH/g) | 0 | 10 | 20 | 30 | 40 |
| | Terpene-phenol T145 (60 mgKOH/g) | 40 | 30 | 20 | 10 | 0 |
| Isocyanate (parts) | ICORONATE L | 0.75 | 0.75 | 0.75 | 0.75 | 0.75 |
| 180° peel strength (N/20mm) Stored at RT | Initial | 31.7 | 27.7 | 35.5 | 35.5 | 28.0 |
| | 7 days | 32.8 | 30.0 | 29.3 | 28.7 | 24.0 |
| | 14 days | - | 30.5 | 30.7 | 28.7 | 23.7 |
| 180° peel strength (N/20mm) Stored at 40°C, 92%RH | 3 days | 34.3 | 29.3 | 27.0 | 23.8 | 23.3 |
| | 7 days | 54.0 | 29.0 | 26.7 | 24.3 | 22.3 |
| | 14 days | - | 31.3 | 30.0 | 27.3 | 23.0 |
| Repulsion resistance (mm) | 24hr at RT | 0.63 | 0.56 | 0.56 | 0.44 | 0.44 |
| | 4hr at 70°C, 80%RH | - | - | - | - | - |
| | 12hr at 70°C, 80%RH | 1.19 | 1.19 | 1.00 | 0.81 | 0.75 |
| Peel under constant load (mm) hot/wet condition 24hr at 50°C, 80%RH | ABS | 50 | 50 | 17.5 | 11 | 8 |
| | PC/ABS | 50 | 50 | 31 | 17.5 | 14 |
| | HIPS | 50 | 50 | 23.5 | 13 | 11 |

As shown in Table 8, with respect to double-faced PSA sheets g2 to g5 each using a terpene-phenol resin (S145) having a hydroxyl value of 100 mgKOH/g solely or in combination with a terpene-phenol resin (T145) having a hydroxyl value of 60 mgKOH/g, when compared to double-faced PSA sheet g1 using solely T145 as the terpene phenol resin, they all exhibited clearly higher resistance against continuous stress. In particular, significant improvements were observed in their peel properties under a constant load in a hot/wet condition, confirming that similar effects as Experimental Examples 1 (Table 1) were obtainable with the compositions according to the present experimental example. When compared to g5 using solely S 145 as the terpene-phenol resin, g2 to g4 using S145 and T145 together exhibited clearly greater peel strength after aged. In particular, for double-faced PSA sheets g3 and g4 containing S 145 as much as 0.9 to 4 times (more specifically, 1 to 3 times) T145 based on the mass, high levels of resistance against continuous stress and aged peel strength were achieved at the same time.

Although specific embodiments of the present invention have been described in detail above, these are merely for illustrations and do not limit the scope of the claims. The art according to the claims includes various modifications and changes made to the specific embodiments illustrated above.

The PSA composition or the PSA sheet disclosed herein is useful for joining components in various OA devices, home appliances, automobiles, and so on (e.g., for fastening various components in such products). In particular, they are preferable for attaching a flexible resin sheet (e.g., a plastic film of about 0.05 mm to 0.2 mm thickness) to a case made of a resin such as ABS, HIPS, PC/ABS blend, or the like. Examples of a product having such a joint part include toner cartridges, printers, notebook PCs, mobile devices, and the like.

**Claims**

1.  A pressure-sensitive adhesive composition comprising a base polymer and a tackifier resin, wherein the base polymer is a block copolymer of a mono-vinyl-substituted aromatic compound and a conjugated diene compound, the tackifier resin comprises a low softening point resin having a softening point below 120 °C and a high softening point resin having a softening point of 120 °C or above, with the high softening point resin comprises a terpene-phenol resin.

2.  The pressure-sensitive adhesive composition according to Claim 1, wherein the base polymer has a diblock fraction of 50 % by mass or larger.

3.  The pressure-sensitive adhesive composition according to Claim 1 or 2, wherein the base polymer is a styrene-based block copolymer.

4.  The pressure-sensitive adhesive composition according to any one of Claims 1 to 3, wherein the high softening point resin comprises a terpene-phenol resin having a hydroxyl value of 80 mgKOH/g or higher.

5.  The pressure-sensitive adhesive composition according to any one of Claims 1 to 4, comprising the high softening point resin in an amount of 20 to 100 parts by mass relative to 100 parts by mass of the base polymer.

6.  The pressure-sensitive adhesive composition according to any one of Claims 1 to 5, wherein the low softening point resin comprises at least one of a petroleum resin and a terpene resin.

7.  The pressure-sensitive adhesive composition according to any one of Claims 1 to 6, comprising, as the tackifier resin, a terpene-phenol resin A and a terpene-phenol resin B, wherein the terpene-phenol resin A has a hydroxyl value of $A_{OH}$ (mgKOH/g) and the terpene-phenol resin B has a hydroxyl value of $B_{OH}$ (mgKOH/g), with $A_{OH}$ being higher than $B_{OH}$.

8.  The pressure-sensitive adhesive composition according to Claim 7, wherein $A_{OH}$ is 80 mgKOH/g or higher and $B_{OH}$ is lower than 80 mgKOH/g.

9.  The pressure-sensitive adhesive composition according to Claim 7 or 8, comprising the terpene-phenol resin A and the terpene-phenol resin B at a A-to-B mass ratio of 1:5 to 5:1.

10. The pressure-sensitive adhesive composition according to any one of Claims 7 to 9, wherein both the terpene-phenol resin A and the terpene-phenol resin B are high softening point resins each having a softening point of 120 °C or above.

11. A pressure-sensitive adhesive sheet comprising a pressure-sensitive adhesive layer formed from a pressure-sensitive adhesive composition according to any one of Claims 1 to 10.

12. A pressure-sensitive adhesive sheet comprising a pressure-sensitive adhesive layer, wherein:

    the pressure-sensitive adhesive layer comprises a base polymer and a tackifier resin, wherein the base polymer is a block copolymer of a mono-vinyl-substituted aromatic compound and a conjugated diene compound; and
    the tackifier resin comprises a low softening point resin having a softening point below 120 °C and a high softening point resin having a softening point of 120 °C or above, with the high softening point resin comprising a terpene-phenol resin.

Fig. 1

Fig. 2

Fig. 3

44

42

44A

44B

4A

4

4B

46

Fig. 4

56

5B

5

5A

52

54

58

Fig. 5

Fig. 6

Fig. 7

Fig. 8

Fig. 9

Europäisches
Patentamt

European
Patent Office

Office européen
des brevets

# EUROPEAN SEARCH REPORT

Application Number

EP 13 15 9512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 172 529 A1 (TOYO ADL CORP [JP]) 7 April 2010 (2010-04-07) * paragraphs [0047], [0049] - [0051]; claims; examples 3,6 * | 1-12 | INV. C09J153/02 C09J193/04 C09J11/08 C08J5/18 C09J7/02 |
| X | EP 0 197 774 A2 (NITTO ELECTRIC IND CO [JP]; JAPAN SYNTHETIC RUBBER CO LTD [JP]) 15 October 1986 (1986-10-15) * page 12, line 10 - line 18; claims; table 3 * | 1-12 | |
| X | US 2011/229721 A1 (HOCH MARTIN [CN] ET AL) 22 September 2011 (2011-09-22) * paragraphs [0031], [0032], [0071], [0072]; claims 1,4 * | 1-12 | |
| A | WO 2006/001548 A2 (TOHCELLO CO LTD [JP]; MITSUI DU PONT POLYCHEMICAL [JP]; TAGUCHI EIICHI) 5 January 2006 (2006-01-05) * the whole document * | 1-12 | |
| | | | TECHNICAL FIELDS SEARCHED (IPC) |
| | | | C09J C08J |

The present search report has been drawn up for all claims

| Place of search | Date of completion of the search | Examiner |
|---|---|---|
| Munich | 21 June 2013 | Iraegui Retolaza, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 15 9512

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2013

| Patent document cited in search report | | Publication date | Patent family member(s) | | Publication date |
|---|---|---|---|---|---|
| EP 2172529 | A1 | 07-04-2010 | EP | 2172529 A1 | 07-04-2010 |
| | | | JP | 4278704 B1 | 17-06-2009 |
| | | | JP | 2010090185 A | 22-04-2010 |
| EP 0197774 | A2 | 15-10-1986 | CA | 1271863 A1 | 17-07-1990 |
| | | | DE | 3679432 D1 | 04-07-1991 |
| | | | EP | 0197774 A2 | 15-10-1986 |
| | | | JP | H0686586 B2 | 02-11-1994 |
| | | | JP | S61231070 A | 15-10-1986 |
| | | | US | 4699938 A | 13-10-1987 |
| US 2011229721 | A1 | 22-09-2011 | CA | 2678329 A1 | 11-03-2010 |
| | | | EP | 2166055 A1 | 24-03-2010 |
| | | | JP | 2010077429 A | 08-04-2010 |
| | | | US | 2011229721 A1 | 22-09-2011 |
| | | | WO | 2010028523 A1 | 18-03-2010 |
| WO 2006001548 | A2 | 05-01-2006 | CN | 1977017 A | 06-06-2007 |
| | | | EP | 1786878 A2 | 23-05-2007 |
| | | | WO | 2006001548 A2 | 05-01-2006 |

EPO FORM P0459

For more details about this annex : see Official Journal of the European Patent Office, No. 12/82

## REFERENCES CITED IN THE DESCRIPTION

### Patent documents cited in the description

- JP 2012060664 A
- JP 2012060665 A
- JP 2012177534 A
- JP 2012177535 A
- JP 2012200907 A
- JP 20011231402001342441 B
- JP H10287858 B

### Non-patent literature cited in the description

- **C. A. DAHLQUIST.** Adhesion: Fundamental and Practice. McLaren & Sons, 1966, 143